# EUROPÄISCHE PATENTSCHRIFT

(11) **EP 3 676 950 B1**
(45) Veröffentlichungstag und Bekanntmachung des Hinweises auf die Patenterteilung: **23.03.2022**
(21) Anmeldenummer: 17761483.1
(22) Anmeldetag: 31.08.2017
(51) Int. Cl.: H02P 6/30, G05B 19/00

(54) **ADAPTIVER STELLANTRIEB ZUM BETRIEB AN EINER DREI- ODER VIERADRIGEN EXTERNEN STEUERLEITUNG MIT UNTERSCHIEDLICHEN MOTORSPANNUNGEN UND NETZFREQUENZEN SOWIE GEEIGNETE VERWENDUNG**
ADAPTIVE ACTUATOR FOR OPERATING ON A THREE OR FOUR-WIRE EXTERNAL CONTROL LINE WITH DIFFERENT VOLTAGES AND NETWORK FREQUENCIES AND ITS USAGE
ACTIONNEUR ADAPTATIF POUR FONCTIONNER SUR UNE LIGNE DE COMMANDE EXTERNE À TROIS OU QUATRE FILS AVEC DES TENSIONS ET DES FRÉQUENCES DE RÉSEAU DIFFÉRENTES ET SON UTILISATION

(43) Veröffentlichungstag der Anmeldung: 08.07.2020
(73) Patentinhaber: Siemens Schweiz AG, 8047 Zürich (CH)
(72) Erfinder: KUCERA, Ladislav, 8908 Hedingen (CH); REICHMUTH, Ronald, 8840 Einsiedeln (CH); SOLTERMANN, Sacha, 6312 Steinhausen (CH)
(74) Vertreter: Maier, Daniel Oliver
(86) Internationale Anmeldenummer: PCT/EP2017/071929
(87) Internationale Veröffentlichungsnummer: WO 2019/042562

(56) Entgegenhaltungen:
- WO-A1-02/095926
- DE-A1-102011 119 067
- N. N: "A6V10636202_de--_b Siemens 2016-12-14 Building Technologies OpenAir(TM) Stellantriebe für Luftklappen", , 17. März 2017 (2017-03-17), XP055475042, Gefunden im Internet: URL:https://www.downloads.siemens.com/down load-center/Download.aspx?pos=download&fct =getasset&id1=A6V10636202 [gefunden am 2018-05-15]

## Beschreibung

Die vorliegende Erfindung betrifft einen Stellantrieb für eine Klappe oder für ein Ventil, insbesondere zum Einstellen eines Volumenstroms zum Heizen, Lüften oder Klimatisieren eines Gebäudes. Der Stellantrieb weist einen Motor, ein nachgeschaltetes Getriebe, typischerweise ein Reduziergetriebe, einen Stellanschluss zum Anschliessen der Klappe oder des Ventils sowie einen elektrischen Anschluss zum Anschliessen des Stellantriebs an einer externen Steuerleitung auf. Die externe Steuerleitung ist zur Energieversorgung des Stellantriebs sowie zur Drehrichtungsgebung des Motors vorgesehen. Sie umfasst eine erste und zweite Motorleitung und eine Masseleitung als Bezugspotenzial. Der Motor ist, basierend auf einer jeweiligen, an der ersten oder zweiten Motorleitung anliegenden ersten oder zweiten Motorspannung, in der ersten oder zweiten Drehrichtung antreibbar.

Aus dem Dokument N.N: "A6V10636202_de--_b Siemens 2016-12-14 Building Technologies OpenAir(TM) Stellantriebe für Luftklappen", 17. März 2017 (2017-03-17), XP055475042, ist ein Stellantrieb für einen Zweipunkt- und Dreipunktbetrieb bekannt, der einen bürstenlosen Gleichstrommotor aufweist. Eine Motorsteuereinheit mit einer Signalauswerteeinheit und einer nachgeschalteten Stelleinrichtung für den bürstenlosen Gleichstrommotor sowie eine Spannungsversorgungseinheit, die aus den Stellsignalen eine Versorgungsgleichspannung zur Stromversorgung der Motorsteuereinheit bereitstellt, sind explizit nicht offenbart.

Ein solcher Stellantrieb wird zur Stromversorgung an die beiden Motorleitungen, die auch als Y1-Leitung und Y2-Leitung bezeichnet werden, angeschlossen. Die erste und zweite Motorspannung kann auch als erste und zweite Motorsteuerspannung oder erste und zweite Steuerspannung bezeichnet werden.

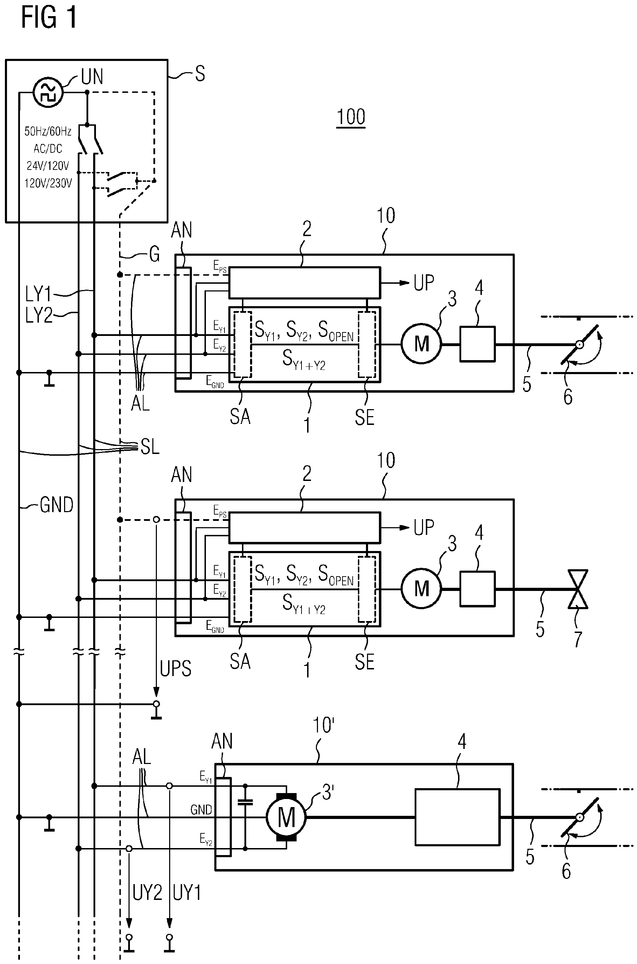

Derartige bekannte Stellantriebe älterer Bauart weisen sogenannte passive Synchronmotoren auf, die direkt und ohne weitere elektronische Schaltungsteile an den beiden Motorleitungen und an der Masseleitung als Bezugspotenzial betrieben werden können. Die Dauer einer an den beiden Motorleitungen anliegenden Motorspannung bestimmt dabei die Fahrdistanz bzw. den Drehwinkel. Diese Art von Induktionsmotor weist einen Startkondensator auf, um den Motor in der gewünschten Drehrichtung starten zu können (siehe FIG 1, Stellantrieb 10' mit Synchronmotor 3'). Da ein solcher Synchronmotor beim Zuschalten der Speisung sehr schnell beschleunigt wird, ist er stark überdimensioniert, um den hohen Beschleunigungen standhalten zu können. Die direkte Speisung eines solchen Synchronmotors ist zudem auf die Speisung mit Wechselspannung eingeschränkt.

Im einfachsten Fall wird zur Drehrichtungsgebung und zur Festlegung der Fahrdistanz für eine entsprechende Zeitdauer eine Netz-(Wechselspannung) direkt auf die jeweilige Motorleitung geschaltet, wie z.B. mittels eines Relais oder Triacs. Die Netzwechselspannung stammt typischerweise aus einem öffentlichen Stromversorgungsnetz, wie z.B. eine Wechselspannung von 230V/50Hz (z.B. Europa) oder eine Wechselspannung von 120V/60Hz (Nordamerika). Alternativ dazu kann eine aus einer Netzwechselspannung abgeleitete, z.B. transformierte Wechselspannung von z.B. 24V/50Hz oder 24V/60Hz direkt an eine der beiden Motorleitungen geschaltet werden.

Weiterhin sind Stellantriebe bekannt, die zumeist einen bürstenlosen Gleichstrommotor, d.h. einen sogenannten BLDC, sowie eine Motorsteuereinheit mit einem prozessorgestützten Mikrocontroller aufweisen. Durch geeignete programmierte Programmschritte (Software) ist ein solcher Stellantrieb in der Lage, hochflexibel und schnell zu positionieren. Bei einem solchen Stellantrieb empfängt die Motorsteuereinheit über die "Motorleitungen" lediglich ein Signal, wie z.B. ein AC- oder DC-Signal, zur Drehrichtungsgebung oder über eine Busleitung entsprechende Steuerbefehle. Die Spannungsversorgung und somit die energetische Versorgung der Stelleinrichtung erfolgt aus einer zusätzlichen Versorgungsspannungsleitung der externen Steuerleitung. Dazu weist ein solcher Stellantrieb eine Spannungsversorgungseinheit auf, die dazu eingerichtet ist, aus einer an der Versorgungsspannungsleitung anliegenden Versorgungsspannung eine Versorgungsgleichspannung zur (alleinigen) Stromversorgung der Motorsteuereinheit bereitzustellen.

Aus Gründen der Flexibilität wäre es wünschenswert, wenn ein Stellantrieb sowohl mit Wechselspannung als auch mit Gleichspannung speisbar wäre und zudem mit Stellantrieben älterer Bauart, die an der gemeinsamen externen Steuerleitung parallel angeschlossen sind, kombinierbar wäre.

Bei den eingangs genannten Stellantrieben wird die Drehrichtung aufgrund der "Signal-Zustände" der beiden Motorleitungen, d.h. der Y1- und Y2-Leitung bestimmt. Dabei dreht der Motor bei Anliegen einer entsprechenden Motorspannung an der ersten Motorleitung in eine erste Drehrichtung und bei Anliegen einer entsprechenden Motorspannung an der zweiten Motorleitung in eine zweite, entgegengesetzte Drehrichtung. Weil aber eine dieser zwei Motorleitungen dann ohne Last ist, schlagen sich allerlei Störungen auf ihr nieder. Die Gründe und die Arten der Störungen sind vielfältig. Deshalb ist es sehr anspruchsvoll, für das gesamte Spektrum an Möglichkeiten eine Verfahrensweise zu finden, die robust funktioniert, schnell zu einer Entscheidung kommt und zudem mit vernünftigen Mitteln realisierbar ist.

Die grosse Vielfalt der Störungen entsteht durch die Signalart der an den beiden Motorleitungen anliegenden Motor- bzw. Signalspannung. Hier kann jeweils eine Wechselspannung (AC) oder auch eine (gepulste) Gleichspannung (DC) anliegen, wie z.B. mit einer Nennspannung von 24V/AC oder 24V/DC. Darüber hinaus kann in die Motorleitung, die nicht elektrisch angesteuert wird, eine nicht unerhebliche Spannung eingekoppelt bzw. induziert werden. Diese Einkopplung stammt von der parallelen Verlegung der beiden Motorleitungen zueinander, durch parallele Verlegung zur anderen z.B. netzspannungsführenden Leitungen und insbesondere durch kapazitive Einkopplung von passiven Synchronmotoren. Letztere werden, wie eingangs beschrieben, direkt und ohne weitere elektronische Schaltungsteile an den beiden Motorleitungen und an der Masseleitung als Bezugspotenzial betrieben. Da diese Induktionsmotoren einen Startkondensator aufweisen, um den Motor in der jeweiligen Drehrichtung starten zu können, koppelt ein Teil der Motorspannung auf der einen Motorleitung induktiv über die "freie", d.h. nicht erregte Motorspule, und weiter über den Kondensator in die andere Motorleitung ein. Dabei kann die induktiv eingekoppelte Spannung eine Signalamplitude im Bereich von 80 bis 240% der nominellen Motor- bzw. Netzspannung aufweisen. Die so induzierte Spannung kann somit eine Signalamplitude aufweisen, die erheblich über der eigentlichen Signalamplitude der Motor- bzw. Netzspannung liegt.

Zudem liegt ein signifikanter Phasenwinkel zwischen der mit Wechselspannung beaufschlagten einen Motorleitung und der anderen Motorleitung, in die über die "freie" Motorspule und den Kondensator eine Spannung induktiv eingekoppelt wird, im Bereich von 60° bis 90° vor.

Dabei ist weiter zu berücksichtigen, dass die Gesamtlänge der externen, von einem zentralen Steuergerät ausgehenden Steuerleitung eine Leitungslänge von bis zu 300m aufweisen kann und dass die Motor- bzw. Netzfrequenz abhängig vom jeweiligen öffentlichen Netz zwischen 48Hz und 62Hz liegen kann.

In der Folge werden die Signale soweit verfälscht, dass eine Erkennung der Drehrichtung mit einfachen Mitteln (abhängig von der Signalamplitude) nicht richtig zugeordnet werden kann. In vielen Applikationen werden die "Y-Eingänge" der Stellantriebe über ein zentrales Steuergerät betrieben, welches die Stellantriebe mit kurzen Pulsen vor und zurück positioniert. Um die Fahrdistanz bzw. den Drehwinkel nicht zu verfälschen, ist es von grosser Wichtigkeit, den wahren Informationsgehalt der Y-Eingänge möglichst rasch zu erfassen, dies einerseits, um möglichst schnell in die korrekte Richtung zu drehen, und andererseits, um die gewünschte Fahrdistanz bzw. den Drehwinkel möglichst exakt zu erfassen.

Prinzipiell wäre es möglich, das Vorhandensein von Wechselspannungssignalen auf den beiden Motorleitungen zu detektieren, indem die Spitzenwerte und Nulldurchgänge erfasst werden. Dies ist allerdings problematisch, da die Wechselspannungssignale durch einen Gleichspannungsanteil überlagert sind. Diese müssten jedoch erst entfernt werden, was nachteilig zusätzliche Verarbeitungszeit erfordert. Dennoch ist ein solches Verfahren stark störanfällig, insbesondere beim Ein- und Ausschalten des Stellantriebs.

Es wäre auch vorstellbar, die "Verkabelungsbedingungen", d.h. das Ausmass der Beeinflussung der Verkabelung auf die jeweiligen Motorleitungen "in Software" zu speichern und langsam zu adaptieren. Der Nachteil liegt in der Dauer der Adaption und auch darin, dass sporadische Situationsänderungen, wie z.B. das Hinzuschalten eines Stellantriebs oder eine Leitungsänderung, zu Fehlzuständen führen können.

Schliesslich wäre es auch denkbar, die Y-Eingänge, also die Eingänge für die Motorleitungen, elektrisch stärker zu belasten. Dies verursacht nachteilig höhere elektrische Verluste. Zudem würde bei einer Parallelschaltung mit einem Stellantrieb mit Synchronmotor die mittels Kondensator um 90° verschobene Phase belastet. Damit verliert der Synchronmotor die zwingend notwendige Phasenschiebung und läuft nicht mehr zuverlässig an. Zwar könnte ein Installateur mit einer geeigneten Massnahme, wie z.B. "Kondensator hier oder da" das Problem beheben. Dies wiederum stellt jedoch erhöhte Anforderungen an das Fachpersonal und verursacht zudem hohe Kosten. Ausgehend von dem eingangs genannten Stand der Technik ist es eine Aufgabe der Erfindung einen Stellantrieb anzugeben, der gegen Signalstörungen resistenter ist.

Die Aufgabe der Erfindung wird mit den Merkmalen des Hauptanspruchs gelöst. Vorteilhafte Ausführungsformen sind in den abhängigen Ansprüchen genannt.

Der Motor ist ein bürstenloser Gleichstrommotor.

Erfindungsgemäss umfasst der Stellantrieb eine Motorsteuereinheit mit einer Signalauswerteeinheit und mit einer nachgeschalteten Stelleinrichtung für den Motor. Die Stelleinrichtung kann z.B. drei Halbbrücken für einen dreiphasigen Gleichstrommotor oder zwei Halbbrücken bzw. eine H-Brücke für einen zweiphasigen Gleichstrommotor aufweisen. Die Halbbrücken umfassen typischerweise zwei in Reihe geschaltete, elektrisch ansteuerbare Schaltmittel wie Schalttransistoren. Weiterhin weist der erfindungsgemässe Stellantrieb eine Spannungsversorgungseinheit auf, die dazu eingerichtet ist, aus der ersten und/oder zweiten Motorspannung eine Versorgungsgleichspannung zur Stromversorgung der Motorsteuereinheit bereitzustellen. Die Spannungsversorgungseinheit kann zur Gleichrichtung eine Diode oder Brückengleichrichter aufweisen. Die so bereitgestellte Versorgungsgleichspannung kann nachfolgend mittels eines Pufferkondensators geglättet und mittels eines nachfolgenden Spannungsreglers auf einen konstanten Spannungswert geregelt werden.

Weiterhin ist die Signalauswerteeinheit gemäss der Erfindung dazu eingerichtet, für die Zeit des Anliegens der ersten und/oder zweiten Motorspannung an der ersten und zweiten Motorleitung zugeordnete Stellsignale für die Stelleinrichtung zu erzeugen. Die Stelleinrichtung ist schliesslich dazu eingerichtet, darauf basierend den Motor in der zugeordneten ersten oder zweiten Drehrichtung elektrisch anzusteuern.

Der Stellantrieb weist zudem eine Spannungsversorgungseinheit auf, die dazu eingerichtet ist, aus der ersten und/oder zweiten Motorspannung oder aus einer an der Versorgungsspannungsleitung anliegenden Versorgungsspannung eine Versorgungsgleichspannung zur Stromversorgung der Motorsteuereinheit bereitzustellen.

Die Signalauswerteeinheit ist dazu eingerichtet, für die Zeit des Anliegens der ersten und/oder zweiten Motorspannung an der ersten und zweiten Motorleitung, d.h. für die Zeit des Anliegens einer ersten und/oder zweiten gültigen Motorspannung, zugeordnete Stellsignale für die Stelleinrichtung zu erzeugen. Die Stelleinrichtung ist dazu eingerichtet, darauf basierend den Motor in der zugeordneten ersten oder zweiten Drehrichtung elektrisch anzusteuern.

Der Kern der Erfindung liegt in der Auskopplung der für die direkte elektrische Speisung des passiven Synchronmotors vorgesehenen elektrischen Leistung aus den beiden Motorleitungen in eine separate Spannungsversorgungseinheit für die Stromversorgung der "elektronischen" Motorsteuereinheit gemäss der Erfindung. Es wird lediglich die jeweilige Motorspannung an den beiden Motorleitungen hinsichtlich der Drehrichtungsgebung ausgewertet, um daraus Stellsignale S_{OPEN}, S_{Y1}, S_{Y2}, S_{Y1+Y2} für einen nun vorteilhaft verwendbaren kompakten bürstenlosen Gleichstrommotor zu generieren.

Erfindungsgemäss weist die Signalauswerteeinheit der Motorsteuereinheit eine Digitalisierungsstufe mit mehreren A/D-Umsetzern zur Umsetzung der beiden Motorspannungen in entsprechende digitale Motorspannungssignale auf. Die Umsetzung erfolgt vorzugsweise mit einer Abtastfrequenz von mindestens 100 kHz, insbesondere mit einer Abtastfrequenz von mindestens 1 MHz. Generell ist mit "digitalen Signalen" bzw. "Digitalsignalen" eine zeitdiskrete Folge von Digitalwerten gemeint. Die jeweiligen A/D-Umsetzer können bereits in einem Mikrocontroller oder Signalprozessor als Teil der Signalauswerteeinheit integriert sein.

Weiterhin umfasst die Signalauswerteeinheit, die vorzugsweise einen Mikrocontroller mit geeigneten Programmschritten aufweist, eine digitale Mischerstufe zur Erzeugung je eines Schwebungssignals aus den eingangsseitig zugeführten digitalisierten Motorspannungssignalen und aus einer Demodulationsfrequenz. Das jeweilige Schwebungssignal repräsentiert dabei den Effektivwert der demodulierten Motorspannungssignale. Der Effektivwert wird auch als RMS-Wert (RMS für "Root Mean Square") bezeichnet.

Die digitale Mischung bzw. Demodulation führt zu einer Frequenzverschiebung im Spektrum der Motorspannungssignale und resultiert in einer Schwebungsfrequenz. Letztere ergibt sich rechnerisch aus dem Absolutwert der Differenz aus der jeweiligen an den Motorleitungen anliegenden bzw. auf diese geschaltete Netz- oder Motorspannungsfrequenz (typischerweise in einem Frequenzbereich von 48 Hz bis 62 Hz) und der Demodulationsfrequenz von vorzugsweise 55 Hz. Die sich darauf ergebende Schwebungsfrequenz liegt entsprechend der gebildeten Differenz im Bereich von 0 Hz bis 7 Hz. Ein durch die digitale Mischung resultierendes höherfrequentes Mischungssignal aus der Summe der Netz- oder Motorspannungsfrequenz und der Demodulationsfrequenz von 55 Hz bei 103 Hz bis 107 Hz wird nicht weiter verarbeitet und vorzugsweise mittels eines digitalen Tiefpassfilters ausgefiltert. Somit resultiert bei einer typischen Netzfrequenz von 50 Hz oder 60 Hz (die Demodulationsfrequenz von 55 Hz liegt somit genau in der Mitte) eine Schwebungsfrequenz von 7 Hz, die hinsichtlich der folgenden digitalen Signalverarbeitung auf besonders einfache Weise weiterverarbeitet werden kann. Die zwei von der Filterstufe zur Frequenzverschiebung ausgegebenen Digitalsignale für den Effektivwert der demodulierten Motorspannungssignale weisen gleichfalls die Schwebungsfrequenz auf.

Der besondere Vorteil liegt hier darin, dass bereits nach wenigen Netzperioden, d.h. nach zwei bis drei Netzperioden, der Effektivwert des jeweiligen Digitalsignals stabile Werte aufweist und zudem sehr resistent gegen Signalstörungen ist. Selbiges gilt für den gebildeten Phasenwinkel zwischen den digitalisierten Motorspannungssignalen.

Weiter gemäss dieser Ausführungsform umfasst die Signalverarbeitung eine Bewertungsstufe bzw. eine Signalbewertungsstufe, welche dazu eingerichtet bzw. programmiert ist, aus den beiden Schwebungs- bzw. Effektivwertsignalen die Stellsignale für die nachgeschaltete Stelleinrichtung des Stellantriebs zu erzeugen und auszugeben.

Dabei bedeutet der Signalzustand S_{OPEN}, dass keine an beiden Motorleitungen anliegende geeignete Spannung für den Stellbetrieb detektiert worden ist. Der Motor bleibt somit stehen. Der Signalzustand S_{Y1} bedeutet, dass nur an der ersten Motorleitung, d.h. an der Y1-Leitung, eine geeignete Spannung für den Stellbetrieb detektiert worden ist. Der Motor wird in die erste Drehrichtung, wie z.B. rechts, angesteuert. Der Signalzustand S_{Y2} bedeutet das entsprechende für die Y2-Leitung und somit für eine zweite Drehrichtung, wie z.B. hier links.

Der Signalzustand S_{Y1+Y2} bedeutet, dass an beiden Motorleitungen eine geeignete Spannung für den Stellbetrieb detektiert worden ist. Dieser Zustand existiert bei dem Anschluss des Stellantriebs an einer dreiadrigen externen Steuerleitung nicht, da ein so angesteuerter passiver Synchronmotor bei gleichzeitiger elektrischer Erregung stehen bleiben würde. Dagegen wird bei dem Anschluss des Stellantriebs an einer vieradrigen externen Steuerleitung der Zustand Y2 priorisiert und somit der Zustand S_{Y2} angenommen.

Nach einer besonderen Ausführungsform weist die Digitalisierungsstufe zusätzlich einen A/D-Umsetzer zur Umsetzung der Versorgungsgleichspannung in ein entsprechendes digitales Versorgungsgleichspannungssignal aufweist. Die Signalauswerteeinheit umfasst eine Reihe von digitalen Filtern mit gleitendem Mittelwert zur Filterung des Versorgungsgleichspannungssignals in ein gefiltertes Versorgungsgleichspannungssignal sowie zur Filterung der digitalisierten Motorspannungssignale in gefilterte Motorspannungssignale. Dadurch werden im Sinne eines Tiefpasses die hochfrequenten Signalanteile ausgefiltert. Die digitale Mischerstufe ist zusätzlich zur Erzeugung eines Digitalsignals für einen Phasenwinkel zwischen den digitalisierten Motorspannungssignalen eingerichtet. Schliesslich ist die Bewertungsstufe dazu eingerichtet, die Stellsignale zu erzeugen und an die nachfolgende Stelleinrichtung auszugeben. Dies erfolgt in Abhängigkeit davon, ob ein aktueller Wert der gefilterten Motorspannungssignale einen ersten Gleichspannungsvergleichswert DC_{LOW} unterschreitet, einen zweiten Gleichspannungsvergleichswert DC_{UPP} übersteigt, oder zwischen beiden Gleichspannungsvergleichswerten DC_{LOW}, DC_{UPP} liegt, ob ein aktueller Wert des jeweiligen Effektivwertsignals einen Vergleichswert AC_{UPP} übersteigt, und ob ein aktueller Wert des Phasenwinkelsignals einen ersten Winkelwert Phi_{Low} unterschreitet, einen zweiten Winkelwert Phi_{UPP} übersteigt, oder zwischen beiden Winkelwerten Phi_{LOW}, Phi_{UPP} liegt. Dabei sind der erste und zweite Gleichspannungsvergleichswert DC_{LOW}, DC_{UPP}, der Vergleichswert AC_{UPP} sowie der erste und zweite Winkelwert Phi_{Low}, Phi_{UPP} auf einen aktuellen Wert des gefilterten Gleichspannungsversorgungssignals normiert.

Der besondere Vorteil liegt hier im möglichen adaptiven Betrieb des erfindungsgemässen Stellantriebs an eine externe Steuerleitung mit Motorspannungen unterschiedlicher Signalart (Wechselspannung, Gleichspannung), Spannungsamplitude und Netzfrequenz. Durch die Normierung werden die zuvor genannten Vergleichswerte für die nachfolgende Bewertung automatisch angepasst.

Durch den Vergleich der gefilterten Motorspannungssignale mit dem zweiten Gleichspannungsvergleichswert DC_{UPP} können z.B. vorliegende Gleichspannungsanteile erkannt und somit ein lastfreier Zustand S_{OPEN} bestimmt werden, wenn beide gefilterten Motorspannungssignale den zweiten Gleichspannungsvergleichswert DC_{UPP} übersteigen und wenn beide Effektivwertsignale den zugehörigen Vergleichswert für das Schwebungssignal nicht überschreiten.

Durch den Vergleich eines aktuellen Werts des Phasenwinkelsignals mit einem unteren und oberen Winkelwert Phi_{LOW}, Phi_{UPP} liegt kann z.B. aus dem Überschreiten des oberen Winkelwerts Phi_{UPP} bestimmt werden, dass das jeweilige Effektivwertsignal Y1_{AC.R}, Y2_{AC.R}, welches den zugehörigen Vergleichswert AC_{UPP} überschreitet, dem Zustand S_{Y1} bzw. S_{Y2} entspricht.

Einer weiteren Ausführungsform zufolge umfasst die digitale Mischerstufe einen Quadraturdemodulator und eine nachgeschaltete Transformationsstufe. Der Quadraturdemodulator wird auch als IQ-Demodulator bezeichnet. Er ist insbesondere zweikanalig ausgeführt. Der Quadraturdemodulator weist einen Sinus- und Cosinus-Frequenzgenerator für die Erzeugung der Demodulationsfrequenz auf und ist dazu eingerichtet, die beiden eingangsseitig zugeführten Motorspannungssignale jeweils mit der Demodulationsfrequenz zu demodulieren und jeweils als Digitalsignal mit zugehörigem Realteil und mit zugehörigem Imaginärteil auszugeben. Die nachgeschaltete Transformationsstufe, die gleichfalls zweikanalig ausgebildet ist, ist dazu eingerichtet, aus diesen Digitalsignalen mit den Real- und Imaginärteilen durch Polarkoordinatentransformation dann die beiden Effektivwertsignale, d.h. die beiden Schwebungssignale, zu bilden und an die Bewertungseinheit auszugeben.

Einer weiteren Ausführungsform zufolge weist die Bewertungsstufe eine Normierungs- und Komparatorstufe sowie eine folgende Entscheidungsstufe auf. Die Normierungs- und Komparatorstufe ist dazu eingerichtet bzw. programmiert, aus einem aktuellen Wert des Versorgungsgleichspannungssignals oder eines mittels eines digitalen Filters mit gleitendem Mittelwert gefilterten Versorgungsgleichspannungssignals normierte Entscheidungsschwellen für die Motorspannungssignale und für die Effektivwertsignale zu erzeugen.

Zudem ist die Normierungs- und Komparatorstufe dazu eingerichtet, diese an eine Reihe von Komparatoren auszugeben und die binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G} mit den Motorspannungssignalen und den Effektivwertsignalen an die Entscheidungsstufe auszugeben. Die Entscheidungsstufe ist dazu eingerichtet bzw. programmiert, die Stellsignale für die nachgeschaltete Stelleinrichtung des Stellantriebs einem binären Entscheidungsbaum folgend zu erzeugen und auszugeben.

Nach einer Ausführungsform dazu ist die Signalauswerteeinheit dazu eingerichtet, die jeweils vom Quadraturdemodulator ausgegebenen Digitalsignale mit zugehörigem Realteil und mit zugehörigem Imaginärteil mittels eines digitalen Filters mit gleitendem Mittelwert zu filtern und dann an die Transformationsstufe auszugeben.

Nach einer weiteren Ausführungsform ist der Stellantrieb zudem an eine externe Steuerleitung mit einer zusätzlichen Versorgungsspannungsleitung zur weiteren (alternativen) Energieversorgung des Stellantriebs anschliessbar. Es ist die Spannungsversorgungseinheit zudem dazu eingerichtet, aus einer an der Versorgungsspannungsleitung anliegenden Versorgungsspannung die Versorgungsgleichspannung zur Stromversorgung der Motorsteuereinheit bereitzustellen. Die Signalauswerteeinheit weist eine Digitalisierungsstufe mit mehreren A/D-Umsetzern zur Umsetzung der beiden Motorspannungen in entsprechende digitale Motorspannungssignale auf. Die Signalauswerteeinheit weist eine digitale Mischerstufe zur Erzeugung je eines niederfrequenteren Schwebungssignals aus den beiden eingangsseitig zugeführten Motorspannungssignalen auf. Das jeweilige Schwebungssignal repräsentiert dabei wieder den Effektivwert der demodulierten Motorspannungssignale. Die Signalauswerteeinheit weist zudem eine Bewertungsstufe auf, welche dazu eingerichtet bzw. programmiert ist, aus den beiden Schwebungssignalen die Stellsignale S_{OPEN}, S_{Y1}, S_{Y2}, S_{Y1+Y2} für die nachgeschaltete Stelleinrichtung des Stellantriebs zu erzeugen.

Einer weiteren Ausführungsform zufolge weist die Digitalisierungsstufe zusätzlich einen A/D-Umsetzer zur Umsetzung der Versorgungsgleichspannung in ein entsprechendes digitales Versorgungsgleichspannungssignal auf. Die Signalauswerteeinheit umfasst eine Reihe von digitalen Filtern mit gleitendem Mittelwert zur Filterung des Versorgungsgleichspannungssignals in ein gefiltertes Versorgungsgleichspannungssignal sowie zur Filterung der digitalisierten Motorspannungssignale in gefilterte Motorspannungssignale. Dadurch werden im Sinne eines Tiefpasses die hochfrequenten Signalanteile ausgefiltert. Die Signalauswerteeinheit weist zudem eine Bewertungsstufe auf, welche dazu eingerichtet ist, die Stellsignale für die nachgeschaltete Stelleinrichtung des Stellantriebs zu erzeugen und auszugeben. Dies erfolgt in Abhängigkeit davon, ob ein aktueller Wert der gefilterten Motorspannungssignale einen ersten Gleichspannungsvergleichswert DC_{LOW} unterschreitet, einen zweiten Gleichspannungsvergleichswert DC_{UPP} übersteigt oder zwischen beiden Gleichspannungsvergleichswert DC_{LOW}, DC_{UPP} bleibt, und ob ein aktueller Wert des jeweiligen Effektivwertsignals einen ersten Vergleichswert AC_{LOW} unterschreitet, einen zweiten Vergleichswert AC_{UPP} überschreitet, oder zwischen beiden Vergleichswerten AC_{LOW}, AC_{UPP} bleibt. Dabei sind der erste und zweite Gleichspannungsvergleichswert DC_{LOW}, DC_{UPP} sowie der erste und zweite Vergleichswert AC_{LOW}, AC_{UPP} auf einen aktuellen Wert des gefilterten Gleichspannungsversorgungssignals normiert.

Der besondere Vorteil liegt auch hier im möglichen adaptiven Betrieb des erfindungsgemässen Stellantriebs an eine externe Steuerleitung mit Motorspannungen unterschiedlicher Signalart (Wechselspannung, Gleichspannung), Spannungsamplitude und Netzfrequenz. Durch die Normierung werden die zuvor genannten Vergleichswerte für die nachfolgende Bewertung wieder automatisch angepasst.

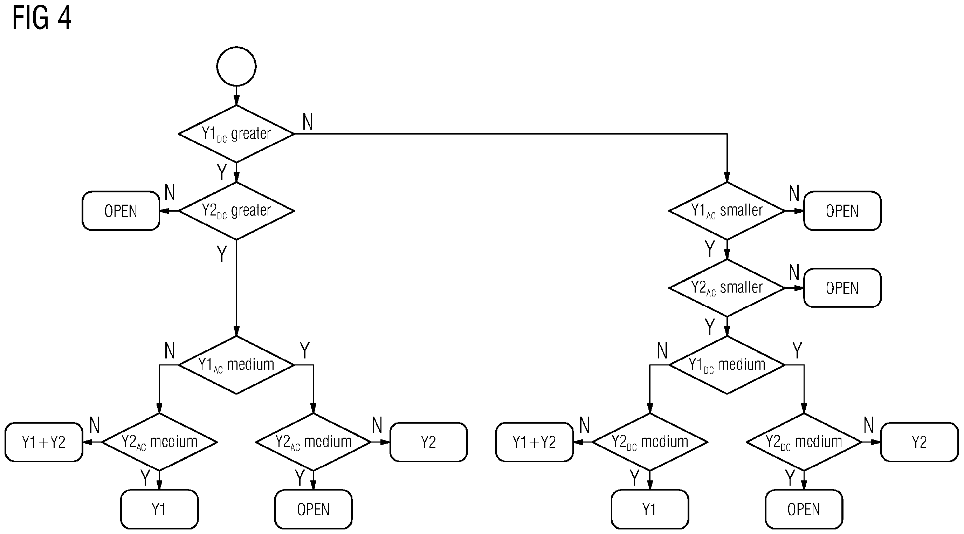

Durch den Vergleich der gefilterten Motorspannungssignale mit dem zweiten Gleichspannungsvergleichswert DC_{UPP} können z.B. vorliegende Gleichspannungsanteile erkannt und somit ein lastfreier Zustand S_{OPEN} bestimmt werden. Überschreiten z.B. beide gefilterten Motorspannungssignale jeweils den oberen Gleichspannungsvergleichswert DC_{UPP}, so kommt es auf den aktuellen Wert des jeweiligen Effektivwertsignals an, ob dieser zwischen dem unteren und oberen Vergleichswert AC_{LOW}, AC_{LOW} liegt oder nicht (siehe dazu die nachfolgende FIG 4).

Nach einer Ausführungsform umfasst die digitale Mischerstufe einen (zweikanaligen) Quadraturdemodulator und eine nachgeschaltete Transformationsstufe. Der Quadraturdemodulator umfasst einen Sinus- und Cosinus-Frequenzgenerator für die Erzeugung der Demodulationsfrequenz und ist dazu eingerichtet, die beiden eingangsseitig zugeführten Motorspannungssignale jeweils mit der Demodulationsfrequenz zu demodulieren und jeweils als Digitalsignal mit zugehörigem Realteil und mit zugehörigem Imaginärteil auszugeben. Die (zweikanalige) Transformationsstufe ist dazu eingerichtet, aus den Digitalsignalen mit den Real- und Imaginärteilen durch Polarkoordinatentransformation zwei Digitalsignale für den Effektivwert zu bilden und an die Bewertungseinheit auszugeben.

Einer Ausführungsform zufolge weist die Bewertungsstufe eine Normierungs- und Komparatorstufe sowie eine nachgeschaltete, folgende Entscheidungsstufe auf. Es weist die Bewertungsstufe eine Normierungs- und Komparatorstufe sowie eine folgende Entscheidungsstufe auf. Die Normierungs- und Komparatorstufe ist dazu eingerichtet, aus einem aktuellen Wert des gefilterten Versorgungsgleichspannungssignals normierte Entscheidungsschwellen für die gefilterten Motorspannungssignale und für die Effektivwertsignale zu erzeugen, diese an eine Reihe von Komparatoren auszugeben und die binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G} mit den gefilterten Motorspannungssignalen und den Effektivwertsignalen an die Entscheidungsstufe auszugeben. Schliesslich ist die Entscheidungsstufe dazu eingerichtet, die Stellsignale S_{OPEN}, S_{Y1}, S_{Y2}, S_{Y1+Y2} für die nachgeschaltete Stelleinrichtung des Stellantriebs einem binären Entscheidungsbaum folgend zu erzeugen und auszugeben.

Nach einer Ausführungsform dazu ist die Signalauswerteeinheit eingerichtet, die jeweils vom Quadraturdemodulator ausgegebenen Digitalsignale mit zugehörigem Realteil und mit zugehörigem Imaginärteil mittels eines digitalen Filters mit gleitendem Mittelwert zu filtern und dann an die Transformationsstufe auszugeben.

Insbesondere ist die Demodulationsfrequenz nach einer weiteren Ausführungsform auf einen Frequenzwert von 55 Hz ± 3 Hz festgelegt.

Einer weiteren Ausführungsform zufolge ist der Bewertungsstufe, die dazu eingerichtet ist, die Stellsignale zu erzeugen, eine Entprellfilterstufe nachgeschaltet, welche dazu eingerichtet ist, kurzzeitige Signalwechsel in den Stellsignalen auszufiltern und die gefilterten Stellsignale dann an die Stelleinrichtung auszugeben.

Nach einer weiteren Ausführungsform ist der Digitalisierungsstufe eine digitale Filterstufe mit je einem digitalen Filter mit gleitendem Mittelwert zur Filterung der digitalisierten Motorspannungssignale sowie des digitalen Versorgungsgleichspannungssignal in gefilterte Motorspannungssignale sowie in ein gefiltertes Versorgungsgleichspannungssignal nachgeschaltet.

Insbesondere ist das jeweilige digitale Filter mit gleitendem Mittelwert ein CIC-Filter.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Beispiel für zwei erfindungsgemässe Stellantriebe jeweils mit einer Motorsteuereinheit mit einer Spannungsversorgungseinheit, einer Signalauswerteeinheit und einer Stelleinrichtung im Verbund mit einem Stellantrieb mit passivem Synchronmotor,
- FIG 2: ein Blockschaltbild einer beispielhaften Signalauswerteeinheit des erfindungsgemässen Stellantriebs für den Betrieb an einer dreiadrigen externen Steuerleitung über ein zentrales Steuergerät,
- FIG 3: ein Blockschaltbild einer beispielhaften Signalauswerteeinheit des erfindungsgemässen Stellantriebs für den Betrieb an einer vieradrigen externen Steuerleitung über ein zentrales Steuergerät, und
- FIG 4: ein Flussdiagramm eines binären Entscheidungsbaums einer Entscheidungsstufe am Bespiel einer Betriebsart des Stellantriebs an einer vieradrigen 24 V/AC-Steuerleitung gemäss der Erfindung.

FIG 1 zeigt ein Beispiel für zwei erfindungsgemässe Stellantriebe 10 jeweils mit einer Motorsteuereinheit 1 mit einer Spannungsversorgungseinheit 2, einer Signalauswerteeinheit SA und einer Stelleinrichtung SE im Verbund mit einem Stellantrieb 10' mit passivem Synchronmotor 3'.

Die FIG 1 zeigt eine HVAC-Anlage 100, welche ein zentrales Steuergerät S und drei Stellantriebe 10, 10' aufweist. Das zentrale Steuergerät S und die Stellantriebe 10, 10' sind an einer gemeinsamen externe Steuerleitung SL angeschlossen. Die Stellantriebe 10, 10' weisen jeweils einen Motor 3, 3', ein nachgeschaltetes Reduziergetriebe 4 sowie einen folgenden Stellanschluss 5 zum Anschliessen einer Klappe 6 oder eines Ventils 7 auf. Zum synchronen Ansteuern der drei Stellantriebe 10, 10' weist das zentrales Steuergerät S zwei ansteuerbare Schaltelemente auf, um im Stellbetrieb eine Netzspannung auf eine erste oder auf eine zweite Motorleitung LY1, LY2 für die Dauer des Stellbetriebs aufzuschalten. Mit UN ist eine Netzspannungsquelle bezeichnet, wie z.B. eine 120V/60Hz- oder 230V/50Hz-Wechselspannungsquelle eines öffentlichen Energieversorgers. Sie kann auch eine z.B. transformatorisch daraus abgeleitete Wechselspannungsquelle sein, wie z.B. eine 24V/50Hz- oder eine 24V/60Hz-Wechselspannungsquelle. Die Nennspannung der Wechselspannung liegt vorzugsweise im Bereich von 24V bis 48V.

Die gezeigte externe Steuerleitung SL umfasst die beiden Motor- bzw. Y1/Y2-Leitungen LY1, LY2 sowie eine Masseleitung GND als Bezugspotenzial. In diesem Fall handelt es sich um eine dreiadrige Steuerleitung SL, über die Energieversorgung wie auch die Drehrichtungsgebung der angeschlossenen Stellantriebe 10, 10' erfolgt.

Gestrichelt ist als vierte Leitung eine Spannungsversorgungsleitung G gezeigt. In diesem Fall einer vieradrigen Steuerleitung SL erfolgt die Energieversorgung der angeschlossenen erfindungsgemässen Stellantriebe 10 über Spannungsversorgungsleitung G und die Drehrichtungsgebung in Form von Stellsignalen über die beiden Motorleitungen LY1, LY2. Ein Betrieb des Stellantriebs 10' mit dem passiven Synchronmotor 3' ist damit nicht möglich. Im Fall der vieradrigen Steuerleitung SL ist zusätzlich auch die Bereitstellung einer Gleichspannung, wie z.B. eine 24V-Gleichspannung, mit 0 Hz durch die Netzspannungsquelle UN möglich.

Im unteren Teil ist ein bekannter Stellantrieb 10' dargestellt, der lediglich einen passiven, direkt über die beiden Motorleitungen LY1, LY2 antreibbaren Synchronmotor 3' aufweist. Ein nicht weiter bezeichneter Startkondensator ist zwischen den beiden Motorleitungen LY1, LY2 angeschaltet, um beim Aufschalten einer Netz- bzw. Motorspannung auf eine der beiden Motorleitungen LY1, LY2 den Synchronmotor 3' durch die dadurch bewirkte Phasenverschiebung zu starten. Andernfalls würde der Synchronmotor 3', wie auch beim Aufschalten einer Netz- oder Motorspannung auf beide Motorleitungen LY1, LY2, stehen bleiben.

Gemäss der Erfindung ist der Motor 3 der beiden erfindungsgemässen Stellantriebe 10 ein bürstenloser Gleichstrommotor (BLDC-Motor). Der erfindungsgemässe Stellantrieb 10 umfasst weiter eine Motorsteuereinheit 1 mit einer Signalauswerteeinheit SA und mit einer nachgeschalteten Stelleinrichtung SE für den Motor 3. Er weist weiter eine Spannungsversorgungseinheit 2, die dazu eingerichtet ist, aus einer ersten und/oder zweiten Motorspannung UY1, UY2, die an der jeweiligen Motorleitung LY1, LY2 anliegt, eine Versorgungsgleichspannung UP zur Stromversorgung der Motorsteuereinheit 1 bereitzustellen. Die Hierzu weist der Stellantrieb 10 einen elektrischen Anschluss AN mit entsprechenden Eingängen (E_{Y1}, E_{Y2}, E_{GND}) auf. Der elektrische Anschluss AN weist bereits einen weiteren zusätzlichen Eingang (E_{PS}) auf, um aus einer an der Versorgungsspannungsleitung G anliegenden Versorgungsspannung UPS die Versorgungsgleichspannung UP bereitzustellen. Der elektrische Anschluss AN kann z.B. als Anschlussbuchse ausgebildet sein oder als ein Anschlusskabel AL ausgebildet sein, welches dann an die externe Steuerleitung SL angeschlossen wird.

Gemäss der Erfindung ist die Signalauswerteeinheit SA des Stellantriebs 10 dazu eingerichtet, für die Zeit des Anliegens der ersten und/oder zweiten Motorspannung UY1, UY2 an der ersten und zweiten Motorleitung LY1, LY2 zugeordnete Stellsignale S_{OPEN}, S_{Y1}, S_{Y2}, S_{Y1+Y2} für die Stelleinrichtung SE zu erzeugen. Letztere ist dazu eingerichtet, dann darauf basierend den Motor 3 in der zugeordneten ersten oder zweiten Drehrichtung elektrisch anzusteuern. Im einfachsten Fall wird die jeweils an den beiden Motorleitungen LY1, LY2 anliegende Motorspannung UY1, UY2 einem Spannungskomparator zugeführt. Überschreitet keine der beiden Motorspannungen UY1, UY2 den Schwellwert, so gibt die Signalauswerteinheit SA das Stellsignal S_{OPEN} (für offene Leitungen) aus. Überschreiten beiden Motorspannungen UY1, UY2 den Schwellwert, so gibt die Signalauswerteinheit SA das Stellsignal S_{Y1+Y2} aus, und in entsprechender Weise das Stellsignal S_{Y1} und S_{Y2}, wenn nur eine der beiden Motorleitungen LY1, LY2 Spannung führt.

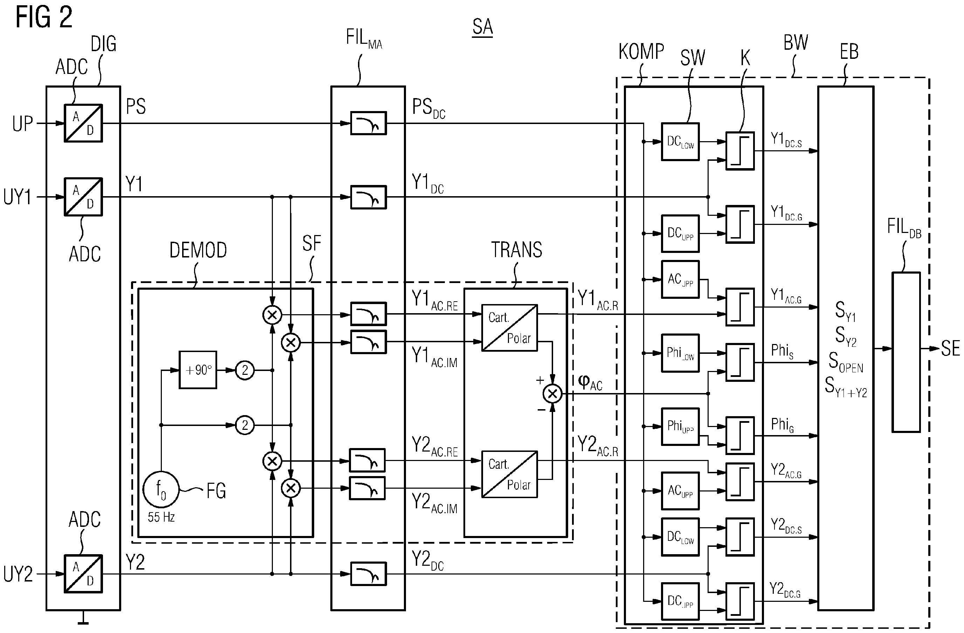

FIG 2 zeigt ein Blockschaltbild einer beispielhaften Signalauswerteeinheit SA des erfindungsgemässen Stellantriebs 10 für den Betrieb an einer dreiadrigen externen Steuerleitung SL über ein zentrales Steuergerät S.

Die gezeigten Funktionsblöcke der Signalauswerteeinheit SA wie eine gezeigte Digitalisierungsstufe DIG, eine digitale Mischerstufe SF sowie eine Bewertungsstufe BW zur Ausgabe der Stellsignale S_{OPEN}, S_{Y1}, S_{Y2}, S_{Y1+Y2} können zumindest teilweise z.B. durch einen prozessorgestützten Mikrocontroller, Mikroprozessor oder Signalprozessor realisiert sein, auf dem eine geeignete Software zur technischen Ausführung signalverarbeitungstechnischen Funktionsschritte der Funktionsblöcke DIG, SF, BW sowie der Unterfunktionsblöcke DEMOD, TRANS, FIL_{MA}, KOMP, EB, FIL_{DB} vorhanden bzw. geladen ist.

Im linken Teil der FIG 2 ist eine Digitalisierungsstufe DIG mit einer Reihe von A/D-Umsetzern ADC dargestellt. Es werden die beiden Motorspannungen UY1, UY2 sowie die Versorgungsgleichspannung UP mit einer hohen Abtastung eingelesen und in Digitalsignale PS, Y1, Y2 umgesetzt. Die Abtastung erfolgt vorzugsweise mit mindestens 100 kHz, vorzugsweise mit mindestens 1 MHz. Die Umsetzung erfolgt somit mit hohem Takt. So ergeben sich genügend Abtastungen für eine gute Mittelung und möglichst wenig Verzögerungszeit bei deren Verarbeitung.

Die beiden digitalisierten Motorspannungssignale Y1, Y2 werden einem Demodulator DEMOD, insbesondere einem Quadraturdemodulator, der digitalen Mischerstufe SF zugeführt. Der Quadraturdemodulator DEMOD weist einen digitalen Frequenzgenerator FG auf, der ein digitales Sinussignal sowie ein in festem 90°-Phasenbezug stehendes digitales Cosinussignal mit einer Demodulationsfrequenz f₀ von 55 Hz erzeugt. Die 55 Hz liegen dabei vorteilhaft genau in der Mitte der beiden gebräuchlichsten Netzfrequenzen von 50 Hz (z.B. Europa) und 60 Hz (z.B. Nordamerika). Damit wird eine allfällige Eingangsschwingung, die zwischen 48Hz bis 62Hz liegt, um 55 Hz verschoben. Es ergibt sich eine neue Schwingung (Schwebung), die zwischen 0 und 7 Hz liegt. Alle höheren Frequenzanteile, vor allem die bei 103 Hz bis 117 Hz, werden durch ein nachfolgendes digitales Filter mit gleitendem Mittelwert entfernt.

Die ausgegebenen Sinus- und Cosinus-Digitalwerte werden jeweils um den Faktor zwei multipliziert und einerseits je einem digitalen Mischer zum Mischen mit dem digitalisierten Motorspannungssignal Y1 und andererseits je einem digitalen Mischer zum Mischen mit dem digitalisierten Motorspannungssignal Y2 zugeführt. Nach der Multiplikation mit diesem orthogonalen Demodulationssignal stehen nach der Tiefpassfilterung mit dem gleitenden Mittelwert jeweils ein Digitalsignal mit dem Realteil und mit dem Imaginärteil Y1_{AC.RE}, Y1_{AC.IM}, Y2_{AC.RE}, Y2_{AC.IM} zur Verfügung.

Diese Digitalsignale werden einer Transformationsstufe TRANS als weiterer Teil der digitalen Mischstufe SF zugeführt, welche mittels zweiter digitaler Polarkoordinatentransformatoren die Digitalsignale mit dem Realteil und mit dem Imaginärteil Y1_{AC.RE}, Y1_{AC.IM}, Y2_{AC.RE}, Y2_{AC.IM} in digitale Effektivwertsignale bzw. Schwebungssignale Y1_{AC.R}, Y2_{AC.R} sowie in ein digitales Phasenwinkelsignal ϕ_{AC}, welches die Phasenlage der beiden Effektivwertsignale Y1_{AC.R}, Y2_{AC.R} und somit die Phasenlage der digitalisierten Motorspannungssignale Y1, Y2 zueinander angibt.

Neben den vier digitalen Filtern mit gleitendem Mittelwert weist die in FIG 2 gezeigte Filterstufe FIL_{MA} (MA für "Moving Average") noch je ein digitales Filter mit gleitendem Mittelwert zur Filterung des Versorgungsgleichspannungssignals PS sowie der beiden digitalisierten Motorspannungssignale Y1, Y2 in ein entsprechend gefiltertes Versorgungsgleichspannungssignals PS_{DC} sowie in zwei gefilterte digitalisierte Motorspannungssignale Y1_{DC}, Y2_{DC} auf.

Einem einzelnen Mittelwert-Filter mangelt es unter Umständen an Filterschärfe. Diese wird durch Kaskadieren mehrerer solcher Filter gesteigert. Da dies sehr rechenintensiv sein kann, ist es vorteilhaft, das Filter nach der Methode der CIC-Filter (CIC für "Cascaded Integrator Comb") in zwei Teile zu zerlegen. Der erste Teil weist (nur) Integratoren auf und ist einfach und schnell zu "rechnen". Der zweite Teil berücksichtigt die Differenzen zu den vorherigen Rechenergebnissen.

Nach der Filterung werden die digitalen Signale PS_{DC}, Y1_{DC}, Y2_{DC}, Y1_{AC.R}, Y2_{AC.R}, ϕ_{AC} mit einem aktuell gefilterten Wert der Versorgungsgleichspannung PS_{DC} mittels einer Normierungs- und Komparatorstufe KOMP normiert und einem Entscheidungsbaum EB zugeführt. Die Normierungs- und Komparatorstufe KOMP und der insbesondere binäre Entscheidungsbaum EB sind dabei Teile der Bewertungsstufe BW.

Die Normierungs- und Komparatorstufe KOMP weist eine Reihe von digitalen Entscheidungsschwellen SW und eine Reihe von nachgeschalteten digitalen Komparatoren K auf. Die digitalen Entscheidungsschwellen SW stellen ausgangsseitig je einen Digitalwert DC_{LOW}, DC_{UPP}, AC_{UPP}, Phi_{LOW}, Phi_{UPP} zur Verfügung, die proportional zu einem aktuellen Wert des gefilterten Versorgungsspannungssignals PS_{DC} sind. Die Indices LOW und UPP stehen hier für "lower" bzw. "upper". Dadurch erfolgt eine Normierung der digitalen Entscheidungsschwellen SW auf die jeweils anliegende Versorgungsgleichspannung PS, PS_{DC}. Dadurch ist vorteilhaft eine automatische Adaption des erfindungsgemässen Stellantriebs 10 auf eine sich ändernde Versorgungsgleichspannung PS, PS_{DC}, wie z.B. 24V, 120V oder 230 V, möglich.

Die normierten Entscheidungsschwellen SW mit den Digitalwerten DC_{LOW}, DC_{UPP}, AC_{UPP}, Phi_{Low}, Phi_{UPP} werden eine Reihe von digitalen Komparatoren K eingangsseitig zugeführt. Dem anderen jeweiligen Eingang der Komparatoren K wird eines der nachfolgenden Digitalsignale Y1_{AC.R}, Y2_{AC.R}, Y1_{DC}, Y2_{DC}, ϕ_{AC} zugeführt. Ausgangsseitig stehen an den Komparatoren K die binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G}. Die Indices S bzw. G bedeuten hier, "smaller" bzw. "greater". So bedeutet z.B. das binäre Vergleichsergebnis Y1_{DC.S}, dass ein am zugehörigen Komparator K anliegender digitaler Wert des gefilterten Motorspannungssignals Y1_{DC} den Digitalwert DC_{LOW} der zugehörigen digitalen Entscheidungsschwelle SW unterschreitet (lower).

Der binäre Entscheidungsbaum EB, der die Reihe der ausgegebenen binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G} in die Stellsignale S_{OPEN}, S_{Y1}, S_{Y2}, S_{Y1+Y2} für die Stelleinrichtung SE umsetzt.

Zuvor durchläuft der gefundene Zustand S_{OPEN}, S_{Y1}, S_{Y2}, S_{Y1+Y2} vorzugsweise noch eine Entprellfilterstufe FIL_{DB} (DB für "Debounce) mit einer Reihe von digitalen Entprellfiltern, welche kurzzeitige Signal-Ausreisser ausblenden.

Denn die schwierigsten Bedingungen entstehen beim Ein- und Ausschalten des Stellantriebs 10. Während des transienten Vorgangs können Fehl-Stellzustände entstehen. Zur Behebung der fehlerhaften Zustände ist dem Entscheidungsbaum EB je ein digitales Entprellfilter nachgeschaltet, welches den Zustand erst dann wechselt, wenn dieser eine Weile stabil anliegt. Die jeweiligen Entprellfilter haben den Charakter eines sogenannten Bit-Filters. Dabei wird ein Zustand positiv oder negativ integriert, je nachdem, ob er anliegt oder nicht. Damit steigt oder sinkt der Integrationswert jedes der vier Zustände, je nachdem, ob der entsprechende Zustand erkannt wird. Liegt ein Zustand so lange an, dass der Integrationswert eine vorgegebene Schwelle erreicht, wird er als der von nun an aktive Zustand übernommen. Die Entprell-Zeitkonstante liegt im Bereich von 10 ms bis 50 ms, vorzugsweise bei 25ms.

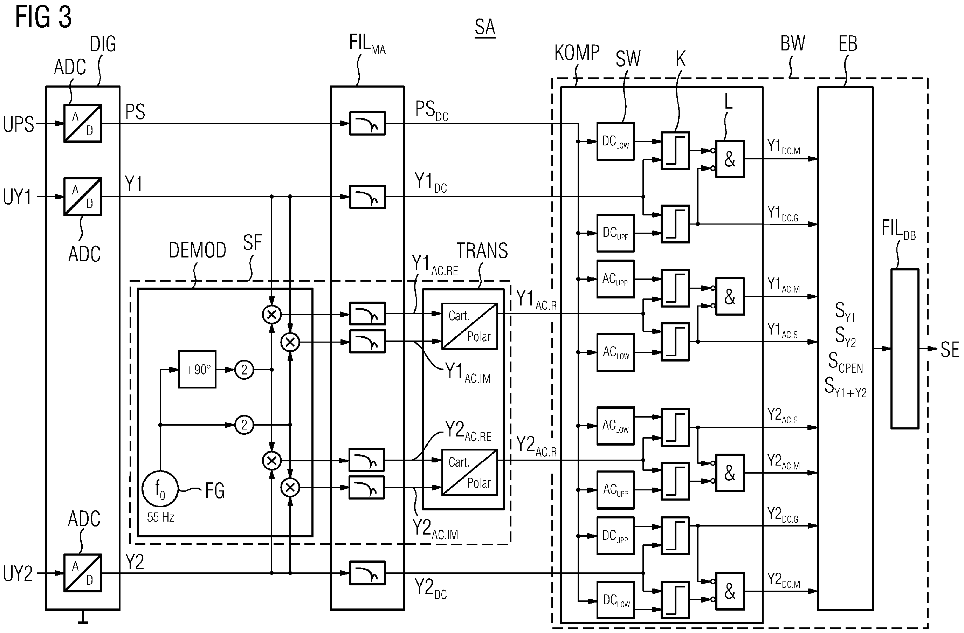

FIG 3 zeigt ein Blockschaltbild einer beispielhaften Signalauswerteeinheit SA des erfindungsgemässen Stellantriebs 10 für den Betrieb an einer vieradrigen externen Steuerleitung SL über ein zentrales Steuergerät S.

Im Vergleich zum Beispiel der FIG 2 fehlt hier die rechnerische Ermittlung eines Phasenwinkelsignals ϕ_{AC}. Dies ist im vieradrigen Fall nicht erforderlich, da zum einen die beiden "Motorleitungen" LY1, LY2 mehr oder weniger lastfrei sind und lediglich der Drehrichtungsgebung dienen. Darüber hinaus sind Stellantriebe 10' mit passiven Synchronmotoren 3', die induktiv störend in die jeweils andere Motorleitung LY1, LY2 einkoppeln könnten, nicht an eine solche vieradrige Steuerleitung SL anschaltbar.

Die dortige Normierungs- und Komparatorstufe KOMP weist wiederum eine Reihe von digitalen Entscheidungsschwellen SW, sowie eine Reihe von nachgeschalteten digitalen Komparatoren K auf. Die digitalen Entscheidungsschwellen SW stellen ausgangsseitig je einen Digitalwert DC_{LOW}, DC_{UPP}, AC_{UPP}, Phi_{LOW}, Phi_{UPP} zur Verfügung, die proportional zu einem aktuellen Wert des gefilterten Versorgungsspannungssignals PS_{DC} sind. Die Indices LOW und UPP stehen hier für "lower" bzw. "upper". Dadurch erfolgt eine Normierung der digitalen Entscheidungsschwellen SW auf die jeweils anliegende Versorgungsgleichspannung PS, PS_{DC}. Dadurch ist vorteilhaft eine automatische Adaption des erfindungsgemässen Stellantriebs 10 auf eine sich ändernde Versorgungsgleichspannung PS, PS_{DC}, wie z.B. 24V, 120V oder 230 V, möglich.

Die normierten Entscheidungsschwellen SW mit den Digitalwerten DC_{LOW}, DC_{UPP}, AC_{UPP}, Phi_{Low}, Phi_{UPP} werden eine Reihe von digitalen Komparatoren K eingangsseitig zugeführt. Dem anderen jeweiligen Eingang der Komparatoren K wird eines der nachfolgenden Digitalsignale Y1_{AC.R}, Y2_{AC.R}, Y1_{DC}, Y2_{DC}, ϕ_{AC} zugeführt. Ausgangsseitig stehen an den Komparatoren K die binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G}. Die Indices S bzw. G bedeuten hier, "smaller" bzw. "greater". So bedeutet z.B. das binäre Vergleichsergebnis Y1_{DC.S}, dass ein am zugehörigen Komparator K anliegender digitaler Wert des gefilterten Motorspannungssignals Y1_{DC} den Digitalwert DC_{LOW} der zugehörigen digitalen Entscheidungsschwelle SW unterschreitet (lower).

Der binäre Entscheidungsbaum EB, der die Reihe der ausgegebenen binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G} in die Stellsignale S_{OPEN}, S_{Y1}, S_{Y2}, S_{Y1+Y2} für die Stelleinrichtung SE umsetzt, ist in der nachfolgenden FIG 4 dargestellt.

FIG 4 zeigt ein Flussdiagramm eines binären Entscheidungsbaums einer Entscheidungsstufe EB am Bespiel einer Betriebsart des Stellantriebs 10 an einer vieradrigen 24 V/AC-Steuerleitung SL gemäss der Erfindung.

Der gezeigte binäre Entscheidungsbaum wird dabei durch die prozessorgestützte Signalverarbeitungseinheit SA fortlaufend, insbesondere zyklisch, mit einer Entscheidungsfrequenz vorzugsweise im Bereich von 100 bis 1000 Hz durchlaufen und dann das jeweilige Ergebnis als Stellsignal S_{OPEN}, S_{Y1}, S_{Y2}, S_{Y1+Y2} ausgegeben.

Es ist im vorliegenden Beispiel z.B. erkennbar, dass wenn beide gefilterten Motorspannungssignale Y1_{DC}, Y2_{DC} jeweils den oberen Gleichspannungsvergleichswert DC_{UPP} überschreiten, es auf den aktuellen Wert der Effektivwertsignals Y1_{AC.R}, Y2_{AC.R} ankommt. Liegt der Wert des ersten Effektivwertsignals Y1_{AC.R} z.B. zwischen dem unteren und oberen Vergleichswert AC_{LOW}, AC_{LOW}, und der Wert des zweiten Effektivwertsignals Y2_{AC.R} nicht, so wird der Zustand S_{Y2} angenommen. Im anderen Fall wird der Zustand S_{OPEN} angenommen und ausgegeben. Liegt dagegen der Wert des ersten Effektivwertsignals Y1_{AC.R} z.B. nicht zwischen dem unteren und oberen Vergleichswert AC_{LOW}, AC_{LOW}, der Wert des zweiten Effektivwertsignals Y2_{AC.R} aber schon, so wird der Zustand S_{Y1} angenommen. Im anderen Fall wird der Zustand S_{Y1+Y2} angenommen und ausgegeben.

Nach jedem Durchlaufen des binären Entscheidungsbaums liegt frühestens nach zwei, jedoch spätestens nach vier Abfragen bzw. Vergleichen ein eindeutiges Stellsignal S_{OPEN}, S_{Y1}, S_{Y2}, S_{Y1+Y2} zur Ausgabe an die Stelleinrichtung SE vor.

### Bezugszeichenliste

- 1: Motorsteuereinheit
- 2: Spannungsversorgungseinheit
- 3: Motor
- 3`: passiver, zweiphasiger Synchronmotor
- 4: Getriebe, Reduziergetriebe
- 5: Stellanschluss
- 6: Klappe
- 7: Ventil
- 10: Stellantrieb, Aktor
- 10': passiver Stellantrieb (Stand der Technik)
- 100: HVAC-Anlage, HLK-Anlage
- ADC: A/D-Umsetzer
- AL: Anschlussleitung
- AN: elektrischer Anschluss
- BW: Bewertungsstufe
- DEMOD: Quadraturdemodulator, IQ-Demodulator
- DIG: Digitalisierungsstufe
- EB: Funktionsblock, Entscheidungsbaum
- FIL_{DB}: Digitalfilter, Debounce-Filter, Entprellfilterstufe
- FIL_{MA}: Digitalfilter, Moving-Average-Filter, Filter mit gleitendem Mittelwert
- FG: Frequenzgenerator
- f₀: Filterfrequenz
- G: Versorgungsspannungsleitung
- GND: Masse, Bezugsspannung
- K: Komparator
- KOMP: Funktionsblock, Normierungs- und Komparatorstufe
- L: Logikgatter
- LY1: Motorleitung, Y1-Steuerleitung
- LY2: Motorleitung, Y2-Steuerleitung
- N: Nein-Entscheidung
- PS: Digitalwert für Versorgungsgleichspannung
- PS_{DC}, Y1_{DC}, Y2_{DC}, Y1_{AC.RE}, Y1_{AC.IM},: gefilterte Digitalwerte, digitale Signale
- Y2_{AC.RE}, Y2_{AC.IM} S: Steuergerät, zentrales Steuergerät
- SA: Signalauswerteeinheit
- SF: digitale Mischerstufe für Schwebungsfrequenz
- SE: Stelleinrichtung, Wechselrichter, Halbbrücke
- SL: Steuerleitung
- SW: Schwellwert, Digitalwerte
- S_{OPEN}, S_{Y1}, S_{Y2}, S_{Y1+Y2}: Stellsignale, Zustand
- TRANS: Transformationsstufe, Polarkoordinatentransformator
- UN: Netzspannungsquelle
- UP: gleichgerichtete Versorgungsgleichspannung
- UPS: Versorgungsspannung
- UY1: erste Motorspannung
- UY2: zweite Motorspannung
- Y: Ja-Entscheidung
- Y1, Y2: digitale Motorspannungssignale
- Y1_{AC.R}, Y2_{AC.R}: Schwebungssignal, Effektivwertsignal, RMS-Werte, digitale Effektivwerte
- ϕ_{AC}: Phasenwinkel

## Patentansprüche

1. Stellantrieb für eine Klappe (6) oder für ein Ventil (7), mit einem bürstenlosen Gleichstrommotor (3), einem nachgeschalteten Getriebe (4), einem Stellanschluss (5) zum Anschliessen der Klappe (6) oder des Ventils (7) sowie mit einem elektrischen Anschluss (AN) zum Anschliessen des Stellantriebs an einer externen Steuerleitung (SL), welche zur Energieversorgung des Stellantriebs sowie zur Drehrichtungsgebung des bürstenlosen Gleichstrommotors (3) vorgesehen ist und welche eine erste und zweite Motorleitung (LY1, LY2) sowie eine Masseleitung (GND) aufweist, wobei der bürstenlose Gleichstrommotor (3) basierend auf einer jeweiligen, an der ersten oder zweiten Motorleitung (LY1, LY2) anliegenden ersten oder zweiten Motorspannung (UY1, UY2) in der ersten oder zweiten Drehrichtung antreibbar ist, wobei der Stellantrieb eine Motorsteuereinheit (1) mit einer Signalauswerteeinheit (SA) und mit einer nachgeschalteten Stelleinrichtung (SE) für den bürstenlosen Gleichstrommotor (3) umfasst, wobei der Stellantrieb eine Spannungsversorgungseinheit (2) aufweist, die dazu eingerichtet ist, aus der ersten und/oder zweiten Motorspannung (UY1, UY2) eine Versorgungsgleichspannung (UP) zur Stromversorgung der Motorsteuereinheit (1) bereitzustellen, wobei die Signalauswerteeinheit (SA) eingerichtet ist, für die Zeit des Anliegens der ersten und/oder zweiten Motorspannung (UY1, UY2) an der ersten und zweiten Motorleitung (LY1, LY2) zugeordnete Stellsignale (S_{OPEN}, S_{Y1}, S_{Y2}, S_{Y1+Y2}) für die Stelleinrichtung (SE) zu erzeugen, und wobei die Stelleinrichtung (SE) eingerichtet ist, darauf basierend den bürstenlosen Gleichstrommotor (3) in der zugeordneten ersten oder zweiten Drehrichtung elektrisch anzusteuern,
- wobei die Signalauswerteeinheit (SA) eine Digitalisierungsstufe (DIG) mit mehreren A/D-Umsetzern (ADC) zur Umsetzung der beiden Motorspannungen (UY1, UY2) in entsprechende digitale Motorspannungssignale (Y1, Y2) aufweist,
- wobei die Signalauswerteeinheit (SA) eine digitale Mischerstufe (SF) zur Erzeugung je eines Schwebungssignals (Y1_{AC.R}, Y2_{AC.R}) aus den eingangsseitig zugeführten digitalisierten Motorspannungssignale (Y1, Y2) und aus einer Demodulationsfrequenz (fₒ) aufweist, wobei das jeweilige Schwebungssignal (Y1_{AC.R}, Y2_{AC.R}) den Effektivwert der demodulierten Motorspannungssignale repräsentiert, und
- wobei die Signalauswerteeinheit (SA) eine Bewertungsstufe (BW) aufweist, welche dazu eingerichtet ist, aus den beiden Schwebungssignalen (Y1_{AC.R}, Y2_{AC.R}) die Stellsignale (S_{OPEN}, S_{Y1}, S_{Y2}, S_{Y1+Y2}) für die nachgeschaltete Stelleinrichtung (SE) des Stellantriebs zu erzeugen.

2. Stellantrieb nach Anspruch 1,
- wobei die Digitalisierungsstufe (DIG) zusätzlich einen A/D-Umsetzer (ADC) zur Umsetzung der Versorgungsgleichspannung (UP) in ein entsprechendes digitales Versorgungsgleichspannungssignal (PS) aufweist,
- wobei die Signalauswerteeinheit (SA) eine Reihe von digitalen Filtern mit gleitendem Mittelwert zur Filterung des Versorgungsgleichspannungssignals (UP) in ein gefiltertes Versorgungsgleichspannungssignal (PS_{DC}) sowie zur Filterung der digitalisierten Motorspannungssignale (Y1, Y2) in gefilterte Motorspannungssignale (Y1_{DC}, Y2_{DC}) aufweist,
- wobei die digitale Mischerstufe (SF) zusätzlich zur Erzeugung eines Digitalsignals (ϕ_{AC}) für einen Phasenwinkel zwischen den digitalisierten Motorspannungssignalen (Y1, Y2) eingerichtet ist, und
- wobei die Bewertungsstufe (BW) eingerichtet ist, die Stellsignale (S_{OPEN}, S_{Y1}, S_{Y2}, S_{Y1+Y2}) zu erzeugen und an die nachfolgende Stelleinrichtung (SE) auszugeben, abhängig davon,
- ob ein aktueller Wert der gefilterten Motorspannungssignale (Y1_{DC}, Y2_{DC}) einen ersten Gleichspannungsvergleichswert DC_{LOW} unterschreitet, einen zweiten Gleichspannungsvergleichswert DC_{UPP} übersteigt, oder zwischen beiden Gleichspannungsvergleichswerten DC_{LOW}, DC_{UPP} liegt,
- ob ein aktueller Wert des jeweiligen Effektivwertsignals (Y1_{AC.R}, Y2_{AC.R}) einen Vergleichswert AC_{UPP} übersteigt, und
- ob ein aktueller Wert des Phasenwinkelsignals (ϕ_{AC}) einen ersten Winkelwert Phi_{Low} unterschreitet, einen zweiten Winkelwert Phi_{UPP} übersteigt, oder zwischen beiden Winkelwerten Phi_{LOW}, Phi_{UPP} liegt,
- wobei der erste und zweite Gleichspannungsvergleichswert DC_{LOW}, DC_{UPP}, der Vergleichswert AC_{UPP} sowie der erste und zweite Winkelwert Phi_{Low}, Phi_{UPP} auf einen aktuellen Wert des gefilterten Gleichspannungsversorgungssignals (PS_{DC}) normiert sind.

3. Stellantrieb nach Anspruch 2, wobei die digitale Mischerstufe (SF) einen Quadraturdemodulator (DEMOD) und eine nachgeschaltete Transformationsstufe (TRANS) umfasst,
- wobei der Quadraturdemodulator (DEMOD) einen Sinus- und Cosinus-Frequenzgenerator (FG) für die Erzeugung der Demodulationsfrequenz (fₒ) aufweist und dazu eingerichtet ist, die beiden eingangsseitig zugeführten Motorspannungssignale (Y1, Y2) jeweils mit der Demodulationsfrequenz (f₀) zu demodulieren und jeweils als Digitalsignal mit zugehörigem Realteil (Y1_{AC.RE}, Y2_{AC.RE}) und mit zugehörigem Imaginärteil (Y1_{AC.IM}, Y2_{AC.IM}) auszugeben, und
- wobei die Transformationsstufe (TRANS) dazu eingerichtet ist, aus den Digitalsignalen mit den Real- und Imaginärteilen (Y1_{AC.RE}, Y2_{AC.RE}, Y1_{AC.IM}, Y2_{AC.IM}) durch Polarkoordinatentransformation die zwei Effektivwertsignale (Y1_{AC.R}, Y2_{AC.R}) sowie das Phasenwinkelsignals (ϕ_{AC}) zu bilden und an die Bewertungseinheit (BW) auszugeben.

4. Stellantrieb nach Anspruch 2 oder 3, wobei die Bewertungsstufe (BW) eine Normierungs- und Komparatorstufe (KOMP) sowie eine folgende Entscheidungsstufe (EB) aufweist,
- wobei die Normierungs- und Komparatorstufe (KOMP) dazu eingerichtet ist, aus einem aktuellen Wert des gefilterten Versorgungsgleichspannungssignals (PS_{DC}) normierte Entscheidungsschwellen (SW) für die gefilterten Motorspannungssignale (Y1_{DC}, Y2_{DC}) und für die Effektivwertsignale (Y1_{AC.R}, Y2_{AC.R}) zu erzeugen, diese an eine Reihe von Komparatoren (K) auszugeben und die binären Vergleichsergebnisse Y1_{DC.S}, Y1_{DC.G}, Y2_{DC.S}, Y2_{DC.G}, Y1_{AC.G}, Y2_{AC.G}, Phi_{S}, Phi_{G} mit den gefilterten Motorspannungssignalen (Y1_{DC}, Y2_{DC}) und den Effektivwertsignalen (Y1_{AC.R}, Y2_{AC.R}) an die Entscheidungsstufe (EB) auszugeben,
- wobei die Entscheidungsstufe (EB) dazu eingerichtet ist, die Stellsignale (S_{OPEN}, S_{Y1}, S_{Y2}, S_{Y1+Y2}) für die nachgeschaltete Stelleinrichtung (SE) des Stellantriebs einem binären Entscheidungsbaum folgend zu erzeugen und auszugeben.

5. Stellantrieb nach Anspruch 3 oder 4, wobei die Signalauswerteeinheit (SA) dazu eingerichtet ist, die jeweils vom Quadraturdemodulator (DEMOD) ausgegebenen Digitalsignale mit zugehörigem Realteil (Y1_{AC.RE}, Y2_{AC.RE}) und mit zugehörigem Imaginärteil (Y1_{AC.IM}, Y2_{AC.IM}) mittels eines Filters mit gleitendem Mittelwert zu filtern und dann an die Transformationsstufe (TRANS) auszugeben.

6. Stellantrieb nach Anspruch 1,
- wobei der Stellantrieb zudem an eine externe Steuerleitung (SL) mit einer zusätzlichen Versorgungsspannungsleitung (G) zur weiteren Energieversorgung des Stellantriebs anschliessbar ist, wobei die Spannungsversorgungseinheit (2) dann zudem dazu eingerichtet ist, aus einer an der Versorgungsspannungsleitung (G) anliegenden Versorgungsspannung (UPS) die Versorgungsgleichspannung (UP) zur Stromversorgung der Motorsteuereinheit (1) bereitzustellen.

7. Stellantrieb nach Anspruch 6,
- wobei die Digitalisierungsstufe (DIG) zusätzlich einen A/D-Umsetzer (ADC) zur Umsetzung der Versorgungsgleichspannung (UP) in entsprechende digitale Motorspannungssignale (Y1, Y2) aufweist,
- wobei die Signalauswerteeinheit (SA) eine Reihe von digitalen Filtern mit gleitendem Mittelwert zur Filterung des Versorgungsgleichspannungssignals (UP) in ein gefiltertes Versorgungsgleichspannungssignal (PS_{DC}) sowie zur Filterung der digitalisierten Motorspannungssignale (Y1, Y2) in gefilterte Motorspannungssignale (Y1_{DC}, Y2_{DC}) aufweist, und
- wobei die Signalauswerteeinheit (SA) eine Bewertungsstufe (BW) aufweist, welche dazu eingerichtet ist, die Stellsignale (S_{OPEN}, S_{Y1}, S_{Y2}, S_{Y1+Y2}) für die nachgeschaltete Stelleinrichtung (SE) des Stellantriebs zu erzeugen und auszugeben, abhängig davon,
- ob ein aktueller Wert der gefilterten Motorspannungssignale (Y1_{DC}, Y2_{DC}) einen ersten Gleichspannungsvergleichswert DC_{LOW} unterschreitet, einen zweiten Gleichspannungsvergleichswert DC_{UPP} übersteigt oder zwischen beiden Gleichspannungsvergleichswert DC_{LOW}, DC_{UPP} bleibt, und
- ob ein aktueller Wert des jeweiligen Effektivwertsignals (Y1_{AC.R}, Y2_{AC.R}) einen ersten Vergleichswert AC_{LOW} unterschreitet, einen zweiten Vergleichswert AC_{UPP} überschreitet, oder zwischen beiden Vergleichswerten AC_{LOW}, AC_{UPP} bleibt, und
- wobei der erste und zweite Gleichspannungsvergleichswert DC_{LOW}, DC_{UPP} sowie der erste und zweite Vergleichswert AC_{LOW}, AC_{UPP} auf einen aktuellen Wert des gefilterten Gleichspannungsversorgungssignals (PS_{DC}) normiert sind.

8. Stellantrieb nach Anspruch 7, wobei die digitale Mischerstufe (SF) einen Quadraturdemodulator (DEMOD) und eine nachgeschaltete Transformationsstufe (TRANS) umfasst, wobei der Quadraturdemodulator (DEMOD) einen Sinus- und Cosinus-Frequenzgenerator (FG) für die Erzeugung der Demodulationsfrequenz (fₒ) aufweist und dazu eingerichtet ist, die beiden eingangsseitig zugeführten Motorspannungssignale (Y1, Y2) jeweils mit der Demodulationsfrequenz (fₒ) zu demodulieren und jeweils als Digitalsignal mit zugehörigem Realteil (Y1_{AC.RE}, Y2_{AC.RE}) und Imaginärteil (Y1_{AC.IM}, Y2_{AC.IM}) auszugeben, wobei die Transformationsstufe (TRANS) dazu eingerichtet ist, aus den Digitalsignalen mit den Real- und Imaginärteilen (Y1_{AC.RE}, Y2_{AC.RE}, Y1_{AC.IM}, Y2_{AC.IM}) durch Polarkoordinatentransformation die zwei Effektivwertsignale (Y1_{AC.R}, Y2_{AC.R}) zu bilden und an die Bewertungseinheit (BW) auszugeben.

9. Stellantrieb nach Anspruch 7 oder 8, wobei die Bewertungsstufe (BW) eine Normierungs- und Komparatorstufe (KOMP) sowie eine folgende Entscheidungsstufe (EB) aufweist,
- wobei die Normierungs- und Komparatorstufe (KOMP) dazu eingerichtet ist, aus einem aktuellen Wert des gefilterten Versorgungsgleichspannungssignals (PS_{DC}) normierte Entscheidungsschwellen (SW) für die gefilterten Motorspannungssignale (Y1_{DC}, Y2_{DC}) und für die Effektivwertsignale (Y1_{AC.R}, Y2_{AC.R}) zu erzeugen, diese an eine Reihe von Komparatoren (K) und Logikgattern (L) auszugeben und die jeweiligen binären Vergleichsergebnisse Y1_{DC.M}, Y1_{DC.G}, Y2_{DC.M}, Y2_{DC.G}, Y1_{AC.M}, Y1_{AC.G}, Y2_{AC.M}, Y2_{AC.G} mit den gefilterten Motorspannungssignalen (Y1_{DC}, Y2_{DC}) und den Effektivwertsignalen (Y1_{AC.R}, Y2_{AC.R}) an die Entscheidungsstufe (EB) auszugeben, und
- wobei die Entscheidungsstufe (EB) dazu eingerichtet ist, die Stellsignale (S_{OPEN}, S_{Y1}, S_{Y2}, S_{Y1+Y2}) für die nachgeschaltete Stelleinrichtung (SE) des Stellantriebs einem binären Entscheidungsbaum folgend zu erzeugen und auszugeben.

10. Stellantrieb nach Anspruch 8 oder 9, wobei die Signalauswerteeinheit (SA) dazu eingerichtet ist, die jeweils vom Quadraturdemodulator (DEMOD) ausgegebenen Digitalsignale mit zugehörigem Realteil (Y1_{AC.RE}, Y2_{AC.RE}) und mit zugehörigem Imaginärteil (Y1_{AC.IM}, Y2_{AC.IM}) mittels eines Filters mit gleitendem Mittelwert zu filtern und dann an die Transformationsstufe (TRANS) auszugeben.

11. Stellantrieb nach einem der vorherigen Ansprüche, wobei die Demodulationsfrequenz (fₒ) auf einen Frequenzwert von 55 Hz ± 3 Hz festgelegt ist.

12. Stellantrieb nach einem der vorherigen Ansprüche, wobei der Bewertungsstufe (BW), die dazu eingerichtet ist, die Stellsignale (S_{OPEN}, S_{Y1}, S_{Y2}, S_{Y1+Y2}) zu erzeugen, eine Entprellfilterstufe (FIL_{DB}) nachgeschaltet ist, welche dazu eingerichtet ist, kurzzeitige Signalwechsel in den Stellsignalen (S_{OPEN}, S_{Y1}, S_{Y2}, S_{Y1+Y2}) auszufiltern und die gefilterten Stellsignale dann an die Stelleinrichtung (SE) auszugeben.

13. Stellantrieb nach Anspruch 12, wobei die jeweiligen digitalen Filter mit gleitendem Mittelwert ein CIC-Filter ist.

## Claims

1. Actuator for a flap (6) or for a valve (7), with a brushless direct current motor (3), a downstream transmission (4), an actuation connection point (5) for connecting the flap (6) or the valve (7) and with an electrical connector (AN) for connecting the actuator to an external control cable (SL), which is provided for the energy supply to the actuator and for providing the direction of rotation of the brushless direct current motor (3) and which has a first and second motor cable (LY1, LY2) and an earth line (GND), wherein the brushless direct current motor (3) can be driven in the first or second direction of rotation on the basis of a respective first or second motor voltage (UY1, UY2) applied to the first or second motor cable (LY1, LY2), wherein the actuator comprises a motor control unit (1) with a signal evaluation unit (SA) and with a downstream control facility (SE) for the brushless direct current motor (3), wherein the actuator has a voltage supply unit (2), which is designed to provide a direct supply voltage (UP) for supplying power to the motor control unit (1) from the first and/or second motor voltage (UY1, UY2), wherein the signal evaluation unit (SA) is designed to generate control signals (S_{OPEN}, S_{Y1}, S_{Y2}, S_{Y1+Y2}) assigned to the control device (SE) for the time that the first and/or second motor voltage (UY1, UY2) is applied to the first and second motor cable (LY1, LY2), and wherein on this basis the control device (SE) is designed to electrically actuate the brushless direct current motor (3) in the assigned first or second direction of rotation,
- wherein the signal evaluation unit (SA) has a digitisation stage (DIG) with a number of A/D converters (ADC) for converting the two motor voltages (UY1, UY2) into corresponding digital motor voltage signals (Y1, Y2),
- wherein the signal evaluation unit (SA) has a digital mixer stage (SF) for generating in each case a beat signal (Y1_{AC.R}, Y2_{AC.R}) from the digitised motor voltage signals (Y1, Y2) supplied on the input side and from a demodulation frequency (fₒ), wherein the respective beat signal (Y1_{AC.R}, Y2_{AC.R}) represents the effective value of the demodulated motor voltage signals, and
- wherein the signal evaluation unit (SA) has an evaluation stage (BW), which is designed to generate the control signals (S_{OPEN}, S_{Y1}, S_{Y2}, S_{Y1+Y2}) for the downstream control device (SE) of the actuator from the two beat signals (Y1_{AC.R}, Y2_{AC.R}).

2. Actuator according to claim 1,
- wherein the digitisation stage (DIG) additionally has an A/D converter (ADC) for converting the direct supply voltage (UP) into a corresponding digital direct supply voltage signal (PS),
- wherein the signal evaluation unit (SA) has a series of digital filters with a moving average value for filtering the direct supply voltage signal (UP) into a filtered direct supply voltage signal (PS_{DC}) and for filtering the digitised motor voltage signals (Y1, Y2) into filtered motor voltage signals (Y1_{DC}, Y2_{DC}),
- wherein the digital mixer stage (SF) is additionally designed to generate a digital signal (ϕ_{AC}) for a phase angle between the digitised motor voltage signals (Y1, Y2), and
- wherein the evaluation stage (BW) is designed to generate the control signals (S_{OPEN}, S_{Y1}, S_{Y2}, S_{Y1+Y2}) and to output the same to the subsequent control device (SE), as a function of
- whether a current value of the filtered motor voltage signals (Y1_{DC}, Y2_{DC}) does not reach a first direct voltage comparison value DC_{LOW}, exceeds a second direct voltage comparison value DC_{UPP}, or lies between both direct voltage comparison values DC_{LOW}, DC_{UPP},
- whether a current value of the respective effective value signal (Y1_{AC.R}, Y2_{AC.R}) exceeds a comparison value AC_{UPP}, and
- whether a current value of the phase angle signal (ϕ_{AC}) does not reach a first angular value Phi_{Low}, exceeds a second angular value Phi_{UPP} or lies between both angular values Phi_{Low}, Phi_{UPP},
- wherein the first and second direct voltage comparison value DC_{LOW}, DC_{UPP}, the comparison value AC_{UPP} and the first and second angular value Phi_{Low}, Phi_{UPP} are standardised to a current value of the filtered direct voltage supply signal (PS_{DC}).

3. Actuator according to claim 2, wherein the digital mixer stage (SF) comprises a quadrature demodulator (DEMOD) and a downstream transformation stage (TRANS),
- wherein the quadrature demodulator (DEMOD) has a sine and cosine frequency generator (FG) for the generation of the demodulation frequency (f₀), and is designed to demodulate the two motor voltage signals (Y1, Y2) supplied on the input side with in each case the demodulation frequency (fₒ) and in each case to output the same as a digital signal with associated real part (Y1_{AC.RE}, Y2_{AC.RE}) and with an associated imaginary part (Y1_{AC.IM}, Y2_{AC.IM}), and
- wherein the transformation stage (TRANS) is designed to form the two effective value signals (Y1_{AC.R}, Y2_{AC.R}) and the phase angle signal (ϕ_{AC}) from the digital signals with the real and imaginary parts (Y1_{AC.RE}, Y2_{AC.RE}, Y1_{AC.IM}, Y2_{AC.IM}) by means of polar coordinate transformation and to output the same to the evaluation unit (BW).

4. Actuator according to claim 2 or 3, wherein the evaluation stage (BW) has a standardisation and comparator stage (KOMP) and a subsequent decision stage (EB),
- wherein the standardisation and comparator stage (KOMP) is designed to generate standardised decision thresholds (SW) for the filtered motor voltage signals (Y1_{DC}, Y2_{DC}) and for the effective value signals (Y1_{AC.R}, Y2_{AC.R}) from a current value of the filtered direct supply voltage signal (PS_{DC}), to output these to a series of comparators (K) and to output the binary comparison results Y1_{DC.S}, Y1_{DC.G}, Y2_{DC.S}, Y2_{DC.G}, Y1_{AC.G}, Y2_{AC.G}, Phi_{S}, Phi_{G} with the filtered motor voltage signals (Y1_{DC}, Y2_{DC}) and the effective value signals (Y1_{AC.R}, Y2_{AC.R}) to the decision stage (EB),
- wherein the decision stage (EB) is designed to generate and output the control signals (S_{OPEN}, S_{Y1}, S_{Y2}, S_{Y1+Y2}) for the downstream control device (SE) of the actuator following a binary decision tree.

5. Actuator according to claim 3 or 4, wherein the signal evaluation unit (SA) is designed to filter the digital signals output in each case from the quadrature demodulator (DEMOD) with an associated real part (Y1_{AC.RE}, Y2_{AC.RE}) and with an associated imaginary part (Y1_{AC.IM}, Y2_{AC.IM}) by means of a filter with a moving average value and then to output the same to the transformation stage (TRANS).

6. Actuator according to claim 1,
- wherein the actuator moreover can be connected to an external control cable (SL) with an additional supply voltage cable (G) for further supplying energy to the actuator, wherein the voltage supply unit (2) is then moreover designed to provide the direct supply voltage (UP) from a supply voltage (UPS) applied to the supply voltage cable (G) in order to supply power to the motor control unit (1).

7. Actuator according to claim 6,
- wherein the digitisation stage (DIG) additionally has an A/D converter (ADC) for converting the direct supply voltage (UP) into corresponding digital motor voltage signals (Y1, Y2),
- wherein the signal evaluation unit (SA) has a series of digital filters with a moving average value for filtering the direct supply voltage signal (UP) into a filtered direct supply voltage signal (PS_{DC}) and for filtering the digitised motor voltage signals (Y1, Y2) into filtered motor voltage signals (Y1_{DC}, Y2_{DC}), and
- wherein the signal evaluation unit (SA) has an evaluation stage (BW), which is designed to generate and output the control signals (S_{OPEN}, S_{Y1}, S_{Y2}, S_{Y1+Y2}) for the downstream control device (SE) of the actuator, as a function of
- whether a current value of the filtered motor voltage signals (Y1_{DC}, Y2_{DC}) does not reach a first direct voltage comparison value DC_{LOW}, exceeds a second direct voltage comparison value DC_{UPP} or remains between both direct voltage comparison value DC_{LOW}, DC_{UPP}, and
- whether a current value of the respective effective value signal (Y1_{AC.R}, Y2_{AC.R}) does not reach a first comparison value AC_{LOW}, exceeds a second comparison value AC_{UPP} or remains between both comparison values AC_{LOW}, AC_{UPP} and
- wherein the first and second direct voltage comparison value DC_{LOW}, DC_{UPP} and the first and second comparison value AC_{LOW}, AC_{UPP} are standardised to a current value of the filtered direct voltage supply signal (PS_{DC}).

8. Actuator according to claim 7, wherein the digital mixer stage (SF) comprises a quadrature demodulator (DEMOD) and a downstream transformation stage (TRANS), wherein the quadrature demodulator (DEMOD) has a sine and cosine frequency generator (FG) for the generation of the demodulation frequency (f₀) and is designed to demodulate the two motor voltage signals (Y1, Y2) supplied on the input side in each case with the demodulation frequency (fₒ) and in each case to output the same as a digital signal with an associated real part (Y1_{AC.RE}, Y2_{AC.RE}) and imaginary part (Y1_{AC.IM}, Y2_{AC.IM}), wherein the transformation stage (TRANS) is designed to form the two effective value signals (Y1_{AC.R}, Y2_{AC.R}) from the digital signals with the real and imaginary parts (Y1_{AC.RE}, Y2_{AC.RE}, Y1_{AC.IM}, Y2_{AC.IM}) by means of polar coordinate transformation and to output the same to the evaluation unit (BW).

9. Actuator according to claim 7 or 8, wherein the evaluation stage (BW) has a standardisation and comparator stage (KOMP) and a subsequent decision stage (EB),
- wherein the standardization and comparator stage (KOMP) is designed to generate standardised decision thresholds (SW) for the filtered motor voltage signals (Y1_{DC}, Y2_{DC}) and for the effective value signals (Y1_{AC.R}, Y2_{AC.R}) from a current value of the filtered direct supply voltage signal (PS_{DC}), to output these to a series of comparators (K) and logic gates (L) and to output the respective binary comparison results Y1_{DC.M}, Y1_{DC.G}, Y2_{DC.M}, Y2_{DC.G}, Y1_{AC.M}, Y1_{AC.G}, Y2_{AC.M,}, Y2_{AC.G}, with the filtered motor voltage signals (Y1_{DC}, Y2_{DC}) and the effective value signals (Y1_{AC.R}, Y2_{AC.R}) to the decision stage (EB), and
- wherein the decision stage (EB) is designed to generate and output the control signals (S_{OPEN}, S_{Y1}, S_{Y2}, S_{Y1+Y2}) for the downstream control device (SE) of the actuator following on from a binary decision tree.

10. Actuator according to claim 8 or 9, wherein the signal evaluation unit (SA) is designed to filter the respective digital signals output from the quadrature demodulator (DEMOD) with an associated real part (Y1_{AC.RE}, Y2_{AC.RE}) and with an associated imaginary part (Y1_{AC.IM}, Y2_{AC.IM}) by means of a filter with a moving average value and then to output the same to the transformation stage (TRANS).

11. Actuator according to one of the preceding claims, wherein the demodulation frequency (f₀) is fixed at a frequency value of 55 Hz ± 3 Hz.

12. Actuator according to one of the preceding claims, wherein a debounce filter stage (FIL_{DB}) is arranged downstream of the evaluation stage (BW), which is designed to generate the control signals (S_{OPEN}, S_{Y1}, S_{Y2}, S_{Y1+Y2}), said debounce filter stage being designed to filter out a brief signal change into the control signals (S_{OPEN}, S_{Y1}, S_{Y2}, S_{Y1+Y2}) and then to output the filtered control signals to the control device (SE).

13. Actuator according to claim 12, wherein the respective digital filter with a moving average value is a CIC filter.

## Revendications

1. Actionneur pour un clapet (6) ou une valve (7), comportant un moteur à courant continu sans balai (3), une boîte de vitesse (4) placée en aval, un raccordement de commande (5) pour raccorder le clapet (6) ou la valve (7) ainsi qu'un raccordement électrique (AN) pour raccorder l'actionneur sur une ligne de commande externe (SL) prévue pour alimenter l'actionneur en énergie et la commande de sens de rotation du moteur à courant continu sans balai (3) et qui comporte un premier et un deuxième câble moteur (LY1, LY2) ainsi qu'une ligne de masse (GND), le moteur à courant continu sans balai (3) étant susceptible d'être entraîné, sur la base d'une première ou deuxième tension moteur (UY1, UY2) correspondante appliquée sur le premier ou deuxième câble moteur (LY1, LY2) dans le premier ou deuxième sens de rotation, l'actionneur comportant une unité de commande de moteur (1) comprenant une unité de dépouillement des signaux (SA) et un moyen de commande (SE) placé en aval relatif au moteur à courant continu sans balai (3), l'actionneur comprenant une unité d'alimentation en courant (2) conçue pour mettre à disposition une tension d'alimentation continue (UP) de la première et/ou deuxième tension moteur (UY1, UY2) pour alimenter l'unité de commande de moteur (1) en courant, l'unité de dépouillement des signaux (SA) étant configurée pour générer, pour la période d'application des première et/ou deuxième tensions moteur (UY1, UY2) aux premier et deuxième câbles de moteur (LY1, LY2), des signaux attribués (S_{OPEN}, S_{Y1}, S_{Y2}, S_{Y1+Y2}) pour le moyen de commande (SE), le moyen de commande (SE) étant conçu pour, sur la base de l'étage ci-dessus, amorcer électriquement le moteur à courant continu sans balai (3) dans le premier ou deuxième sens de rotation attribué,
- l'unité de dépouillement des signaux (SA) comprenant un étage de numérisation (DIG) comportant plusieurs convertisseurs analogique-numérique (ADC) pour convertir les deux tensions de moteur (UY1, UY2) en des signaux de tension de moteur (Y1, Y2) correspondants,
- l'unité de dépouillement des signaux (SA) comportant un étage de mélange (SF) numérique pour générer un signal de battement (Y1_{AC.R}, Y2_{AC.R}) à partir des signaux de tension de moteur numérisés (Y1, Y2) alimentés du côté entrée et d'une fréquence de démodulation (f₀), le signal de battement correspondant (Y1_{AC.R}, Y2_{AC.R}) représentant la valeur effective des signaux de tension de moteur démodulés, et
- l'unité de dépouillement des signaux (SA) comprenant un étage d'évaluation (BW) apte à générer, à partir des deux signaux de battement (Y1_{AC.R}, Y2_{AC.R}), les signaux de commande (S_{OPEN}, S_{Y1}, S_{Y2}, S_{Y1+Y2}) pour le moyen de commande (SE), placé en aval, de l'actionneur.

2. Actionneur selon la revendication 1,
- l'étage de numérisation (DIG) comprenant par ailleurs un convertisseur analogique/numérique (ADC) pour convertir la tension d'alimentation continue (UP) en un signal de tension d'alimentation continue (PS) correspondant,
- l'unité de dépouillement des signaux (SA) comprenant une série de filtres numériques à moyenne mobile pour filtrer le signal de tension d'alimentation continue (UP) en un signal de tension d'alimentation continue filtré (PS_{DC}) ainsi que pour filtrer les signaux de tension de moteur numérisés (Y1, Y2) en des signaux de tension de moteur filtrés (Y1_{DC}, Y2_{DC}),
- l'étage de mélange numérique (SF) étant par ailleurs conçu pour générer un signal numérique (ϕ_{AC})pour un angle de phase entre les signaux de tension de moteur numérisés (Y1, Y2), et
- l'étage d'évaluation (BW) étant conçu pour générer les signaux de commande (S_{OPEN}, S_{Y1}, S_{Y2}, S_{Y1+Y2}) et pour les délivrer au moyen de commande (SE), placé en aval, en fonction de la question de savoir
- si une valeur actuelle des signaux de tension de moteur filtrés (Y1_{DC}, Y2_{DC}) est inférieure à une première valeur de tension continue de référence DC_{LOW}, supérieure à une deuxième valeur de tension continue de référence DC_{UPP} ou si elle se situe entre les deux valeurs de tension continue de référence DC_{LOW}, DC_{UPP},
- si une valeur actuelle du signal de valeur effective correspondant (Y1_{AC.R}, Y2_{AC.R}) est supérieure à une valeur de référence AC_{UPP}, et
- si une valeur actuelle du signal d'angle de phase (ϕ_{AC}) est inférieure à une première valeur d'angle Phi_{LOW}, supérieure à une deuxième valeur d'angle Phi_{UPP} ou se situe entre les deux valeurs d'angle Phi_{LOW}, Phi_{UPP},
- les première et deuxième valeurs de référence de tension continue DC_{LOW}, DC_{UPP}, la valeur de référence AC_{UPP} ainsi que les première et deuxième valeurs d'angle Phi_{LOW}, Phi_{UPP} étant normalisées à une valeur actuelle du signal d'alimentation en tension continue filtré (PS_{DC}) .

3. Actionneur selon la revendication 2, dans lequel l'étage de mélange numérique (SF) comporte un démodulateur de quadrature (DEMOD) et un étage de transformation placé en aval (TRANS),
- le démodulateur en quadrature (DEMOD) comportant un générateur de fréquence sinus et cosinus (FG) pour générer la fréquence de démodulation (fₒ) et étant conçu pour démoduler les deux signaux de tension de moteur (Y1, Y2) alimentés du côté entrée avec la fréquence de démodulation (f₀) chacune et les délivrer comme signal numérique chacun avec partie réelle associée (Y1_{AC.RE}, Y2_{AC.RE}) et avec partie imaginaire associée (Y1_{AC.IM}, Y2_{AC.IM}), et
- l'étage de transformation (TRANS) étant conçu pour constituer, à partir des signaux numériques avec parties réelle et imaginaire (Y1_{AC.RE}, Y2_{AC.RE}, Y1_{AC.IM}, Y2_{AC.IM}) par transformation de coordonnées polaires, les deux signaux de valeur effective (Y1_{AC.R}, Y2_{AC.R}) ainsi que le signal d'angle de phase (ϕ_{AC}) et les délivrer à l'unité d'évaluation (BW).

4. Actionneur selon la revendication 2 ou 3, dans lequel l'étage d'évaluation (BW) comprend un étage de normalisation et de comparateur (KOMP) ainsi qu'un étage de décision (EB) suivant,
- l'étage de normalisation et de comparateur (KOMP) étant conçu pour générer, à partir d'une valeur actuelle du signal de tension d'alimentation continue (PS_{DC}), des seuils de décision normalisés (SW) pour les signaux de tension de moteur filtrés (Y1_{DC}, Y2_{DC}) et pour les signaux de valeur effective (Y1_{AC.R}, Y2_{AC.R}), pour délivrer ceux-ci à une série de comparateurs (K) et délivrer les résultats de comparaison binaires Y1_{DC.S}, Y1_{DC.G}, Y2_{DC.S}, Y2_{DC.G}, Y1_{AC.G}, Y2_{AC.G}, Phi_{S}, Phi_{G} avec les signaux de tension de moteur filtrés (Y1_{DC}, Y2_{DC}) et les signaux de valeur effective (Y1_{AC.R}, Y2_{AC.R}) à l'étage de décision (EB),
- l'étage de décision (EB) étant conçu pour générer et délivrer les signaux de commande (S_{OPEN}, S_{Y1}, S_{Y2}, S_{Y1+Y2}) pour le moyen de commande (SE), placé en aval, de l'actionneur selon un arbre de décision binaire.

5. Actionneur selon la revendication 3 ou 4, dans lequel l'unité de dépouillement des signaux (SA) est apte à filtrer les signaux numériques avec partie réelle associée (Y1_{AC.RE}, Y2_{AC.RE}) et avec partie imaginaire associée (Y1_{AC.IM}, Y2_{AC.IM}) délivrés respectivement par le démodulateur de quadrature (DEMOD) à l'aide d'un filtre à moyenne mobile et les délivrer par la suite à l'étage de transformation (TRANS).

6. Actionneur selon la revendication 1,
- l'actionneur pouvant en outre être raccordé à une ligne de commande externe (SL) avec une ligne de tension d'alimentation supplémentaire (G) pour la poursuite de l'alimentation en énergie de l'actionneur, l'unité d'alimentation en tension (2) étant par ailleurs conçue pour mettre à disposition, à partir d'une tension d'alimentation (UPS) appliquée à la ligne de tension d'alimentation (G), la tension continue d'alimentation (UP) pour l'alimentation en courant de l'unité de commande du moteur (1).

7. Actionneur selon la revendication 6,
- l'étage de numérisation (DIG) comprenant par ailleurs un convertisseur analogique/numérique (ADC) pour convertir la tension d'alimentation continue (UP) en des signaux de tension de moteur (Y1, Y2) numériques correspondants,
- l'unité de dépouillement des signaux (SA) comprenant une série de filtres numériques à moyenne mobile pour filtrer le signal de tension d'alimentation continue (UP) en un signal de tension d'alimentation continue filtré (PS_{DC}) ainsi que pour filtrer les signaux de tension de moteur numérisés (Y1, Y2) en des signaux de tension de moteur filtrés (Y1_{DC}, Y2_{DC}), et
- l'unité de dépouillement de signaux (SA) comprenant un étage d'évaluation (BW) apte à générer et délivrer les signaux de commande (S_{OPEN}, S_{Y1}, S_{Y2}, S_{Y1+Y2}) pour le moyen de commande (SE), placé en aval, de l'actionneur, en fonction de la question de savoir
- si une valeur actuelle des signaux de tension de moteur filtrés (Y1_{DC}, Y2_{DC}) est inférieure à une première valeur de tension continue de référence DC_{LOW}, supérieure à une deuxième valeur de tension continue de référence DC_{UPP} ou si elle se situe entre les deux valeurs de tension continue de référence DC_{LOW}, DC_{UPP}, et
- si une valeur actuelle du signal de valeur effective correspondant (Y1_{AC.R}, Y2_{AC.R}) est inférieure à une première valeur de tension continue de référence AC_{LOW}, supérieure à une deuxième valeur de tension continue de référence AC_{UPP} ou si elle se situe entre les deux valeurs de référence AC_{LOW}, AC_{UPP}, et
- les première et deuxième valeurs de référence de tension continue DC_{LOW}, DC_{UPP}, ainsi que les première et deuxième valeurs de référence AC_{LOW}, AC_{UPP} étant normalisées à une valeur actuelle du signal d'alimentation en tension continue filtré (PS_{DC}).

8. Actionneur selon la revendication 7, dans lequel l'étage de mélange numérique (SF) comportant un démodulateur de quadrature (DEMOD) et un étage de transformation placé en aval (TRANS), le démodulateur de quadrature (DEMOD) comportant un générateur de fréquence sinus et cosinus (FG) pour générer la fréquence de démodulation(f₀) et étant conçu pour démoduler les deux signaux de tension de moteur (Y1, Y2) alimentés du côté entrée avec la fréquence de démodulation (f₀) chacune et les délivrer comme signal numérique chacun avec partie réelle associée (Y1_{AC.RE}, Y2_{AC.RE}) et avec partie imaginaire associée (Y1_{AC.IM}, Y2_{AC.IM}), l'étage de transformation (TRANS) étant conçu pour constituer, à partir des signaux numériques avec parties réelle et imaginaire (Y1_{AC.RE}, Y2_{AC.RE}, Y1_{AC.IM}, Y2_{AC.IM}) par transformation de coordonnées polaires, les deux signaux de valeur effective (Y1_{AC.R}, Y2_{AC.R}) et les délivrer à l'unité d'évaluation (BW) .

9. Actionneur selon la revendication 7 ou 8, dans lequel l'étage d'évaluation (BW) comprenant un étage de normalisation et de comparateur (KOMP) ainsi qu'un étage de décision (EB) suivant,
- l'étage de normalisation et de comparateur (KOMP) étant conçu pour générer, à partir d'une valeur actuelle du signal de tension d'alimentation continue (PS_{DC}) des seuils de décision normalisés (SW) pour les signaux de tension de moteur filtrés (Y1_{DC}, Y2_{DC}) et pour les signaux de valeur effective (Y1_{AC.R}, Y2_{AC.R}) pour délivrer ceux-ci à une série de comparateurs (K) de portes logiques (L) et délivrer les résultats de comparaison binaires correspondants Y1_{DC.M}, Y1_{DC.G}, Y2_{DC.M}, Y2_{DC.G}, Y1_{AC.M}, Y1_{AC.G}, Y2_{AC.M}, Y2_{AC.G} avec les signaux de tension de moteur filtrés (Y1_{DC}, Y2_{DC}) et les signaux de valeur effective (Y1_{AC.R}, Y2_{AC.R}) à l'étage de décision (EB), et
- l'étage de décision (EB) étant conçu pour générer et délivrer les signaux de commande (S_{OPEN}, S_{Y1}, S_{Y2}, S_{Y1+Y2}) pour le moyen de commande (SE), placé en aval, de l'actionneur selon un arbre de décision binaire.

10. Actionneur selon la revendication 8 ou 9, dans lequel l'unité de dépouillement des signaux (SA) est apte à filtrer les signaux numériques avec partie réelle associée (Y1_{AC.RE}, Y2_{AC.RE}) et avec partie imaginaire associée (Y1_{AC.IM}, Y2_{AC.IM}) délivrés respectivement par le démodulateur de quadrature (DEMOD) à l'aide d'un filtre à moyenne mobile et les délivrer par la suite à l'étage de transformation (TRANS).

11. Actionneur selon l'une quelconque des revendications précédentes, dans lequel la fréquence de démodulation (f₀) est fixée à une valeur de fréquence de 55 Hz ± 3 Hz.

12. Actionneur selon l'une quelconque des revendications précédentes, dans lequel, en aval de l'étage d'évaluation (BW) conçu pour générer les signaux de commande (S_{OPEN}, S_{Y1}, S_{Y2}, S_{Y1+Y2}), un étage de filtrage anti-rebond (FIL_{DB}) conçu pour filtrer des changements de signaux de courte durée dans les signaux de commande (S_{OPEN}, S_{Y1}, S_{Y2}, S_{Y1+Y2}) et pour délivrer ensuite les signaux de commande filtrés au moyen de commande (SE) est prévu.

13. Actionneur selon la revendication 12, dans lequel les filtres numériques respectifs à moyenne mobile sont un filtre CIC.
